# FASCICULE DE BREVET EUROPEEN

(11) **EP 1 181 176 B1**
(45) Date de publication et mention de la délivrance du brevet: **03.11.2004**
(21) Numéro de dépôt: 00931359.4
(22) Date de dépôt: 26.05.2000
(51) Int. Cl.: B60S 1/34

(54) **DISPOSITIF DE FIXATION D'UN MOYEU DE BRAS D'ESSUIE-GLACE SUR UN AXE DE PIVOTEMENT**
VORRICHTUNG ZUM BEFESTIGEN EINER WISCHERARMNABE AUF EINER DREHACHSE
DEVICE FOR FIXING THE HUB OF AN ARM OF A WINDSCREEN WIPER

(30) Priorité: 28.05.1999 FR 9906773; 31.03.2000 FR 0004108
(43) Date de publication de la demande: 27.02.2002
(73) Titulaire: Societe de Recherches d'Etudes et de Valorisation, 27180 Claville (FR)
(72) Inventeur: ECKENDORFF, Jean-Pierre, F-27180 Claville (FR)
(74) Mandataire: Santarelli
(86) Numéro de dépôt international: PCT/FR2000/001433
(87) Numéro de publication internationale: WO 2000/073110

(56) Documents cités:
- EP-A- 0 669 236
- EP-A- 0 835 792
- US-A- 2 193 724
- US-A- 2 885 230
- US-A- 2 994 900
- US-A- 3 419 299

## Description

La présente invention concerne un dispositif de fixation de bras d'essuie-glace, notamment pour pare-brises de véhicules automobiles.

On connaît l'importance d'une fixation fiable et correcte de tels équipements sur les performances des essuie-glaces et donc sur la sécurité de conduite du véhicule par temps de pluie ou de neige. Dans les dispositifs actuels les plus répandus, les extrémités des axes oscillants sur lesquels se fixe le bras d'essuyage de pare-brise comportent une partie filetée sur laquelle se visse un écrou de blocage du bras, cette partie filetée, de plus petit diamètre que l'axe oscillant, se raccordant à ce dernier par une portée généralement tronconique striée régulièrement suivant les génératrices du tronc de cône cf. par exemple US-A-2 193 724 ou EP-A-0 835 792.

Les bras de type connu actuels comportent un trou d'assemblage tronconique correspondant qui vient, lors du premier montage, s'emboîter à force sur la partie striée de l'axe dont les stries s'impriment alors dans l'alésage du bras, généralement fait d'un métal moins dur que l'acier de l'axe tel qu'un alliage à base de zinc dit Zamak ou d'aluminium.

L'impression des stries dans l'alésage assure le blocage en rotation de l'arbre par rapport à l'axe. Toutefois, ce type d'assemblage, s'il est simple et peu coûteux, supporte mal les démontages et ne garantit pas une bonne perpendicularité du bras par rapport à son axe de rotation, notamment pour les emboîtements sur partie tronconique striée.

Si un réglage de position s'avère nécessaire, un nouveau serrage dans une position angulaire différente sur la surface de l'alésage du bras, déjà striée, se fera sur les stries initiales provoquant une machuration de celles-ci et ces stries ne seront plus aptes à tenir le couple d'entraînement du bras d'essuie-glace. Pour cette raison, les constructeurs automobiles imposent de mettre au rebut tout bras d'essuie-glace mal monté, tant en première monte qu'en réparation et de le remplacer par un neuf afin de bien garantir la tenue mécanique et éviter un effet de blocage réduit et des risques de déformation sur les surfaces de serrage pouvant entraîner des défauts de positionnement du bras. La qualité de l'assemblage dépendra du soin apporté lors du montage en chaîne au positionnement initial du bras.

Ce type de montage sur portée tronconique striée ne permet pas de maîtriser avec précision la position axiale du bras sur l'axe car si la nature des matériaux utilisés permet le marquage par pression des cannelures mâles de l'arbre en acier dans le cône femelle de la portée tronconique, la forme tronconique adoptée permet difficilement de maintenir la tension d'assemblage, les matériaux utilisés, généralement en métal tendre, ayant tendance à fluer, altérant la qualité de la liaison et l'arbre alors tourne à l'intérieur de la portée tronconique femelle sans assurer l'entraînement de l'essuie-glace.

Par contre, si l'assemblage tronconique est bien conçu et assure correctement sa fonction, il est par nature autocoinçant et nécessite un extracteur pour son démontage.

Par ailleurs, il est difficile d'assurer avec une portée tronconique, surtout de faible longueur, une bonne perpendicularité du bras par rapport à son axe de pivotement. Un tel défaut de perpendicularité entraîne des désordres de fonctionnement et notamment une variation importante de la vitesse d'essuyage prévue ainsi que des bruits et vibrations de la lame de caoutchouc formant le balai d'essuie-glace.

Les entraîneurs de bras en tôle emboutie posent d'autres problèmes. Etant réalisé en acier, le marquage par les cannelures de l'arbre dans la portée tronconique de l'entraîneur sera très superficiel, du fait de la dureté du matériau et sur la hauteur particulièrement réduite de la portée, ce qui nécessitera d'augmenter sensiblement la pression d'assemblage.

L'objet de la présente invention est une structure de bras d'essuie-glace permettant un réglage de positionnement angulaire précis, tout en restant d'un faible coût et se montant par un assemblage rapide, en une seule opération avec un ajustement aisé du calage angulaire du bras d'essuie-glace.

Selon l'invention, un dispositif de fixation d'un moyeu de bras d'essuie-glace sur l'axe de pivotement avec des moyens de blocage du bras sur l'axe de pivotement, une cavité ménagée dans le moyeu contenant des moyens de réglage de positionnement angulaire du bras par rapport à l'axe, ledit moyeu prenant appui sur une embase de butée emboîtée sur une portée de l'axe, ledit dispositif est caractérisé en ce que, les moyens de blocage étant adaptés à prendre soit une position de serrage pour serrer le moyeu contre l'embase de butée, soit une position de desserrage, lesdits moyens de réglage comportent une bague de liaison solidaire en rotation de l'axe et logée dans ladite cavité du moyeu avec un certain jeu permettant un débattement angulaire relatif limité entre la bague de liaison et le moyeu en position de desserrage des moyens de blocage, tandis que tout déplacement relatif est interdit entre la bague de liaison et le moyeu en position de serrage des moyens de blocage.

Avantageusement, ledit jeu angulaire de la bague de liaison à l'intérieur de la cavité du moyeu est déterminé par un emboîtement de la bague de liaison suivant un contour polygonal.

Ainsi, il pourra être prévu d'intégrer sur l'arbre le contour de la bague de liaison pour l'emboîter directement dans la cavité complémentaire du moyeu, un même moyen élastique pouvant être interposé entre l'arbre et le moyeu, ce qui supprime l'emploi d'une bague de liaison sans compliquer excessivement la mise en forme de l'extrémité de l'arbre. Une portée de forme polygonale, par exemple hexagonale, sera formée directement sur l'arbre, cette portée venant s'emboîter dans une cavité correspondante du moyeu ayant la même forme, mais légèrement plus grande de façon à permettre un jeu angulaire du bras sur l'arbre.

De préférence, un élément élastique amortisseur du déplacement angulaire est interposé dans un espace séparant l'intérieur du moyeu de l'extérieur de la bague de liaison.

Dans cette variante, il est prévu, afin d'amortir les chocs de fin de course à chaque inversion de sens de fonctionnement, dans l'espace séparant directement l'arbre du moyeu, un élément amortisseur tel qu'une lame de ressort de forme appropriée qui permettra également de maintenir dans sa position théorique de réglage le bras par rapport à l'arbre.

Avantageusement, la bague de liaison a un contour extérieur cylindrique emboîté dans un alésage correspondant du moyeu, sa rotation dans cet alésage étant angulairement limitée par au moins une nervure radiale pouvant osciller dans au moins un logement radial correspondant du moyeu, des moyens élastiques étant interposés entre les parois radiales de la nervure et les parois radiales opposées du logement radial.

Dans un mode de réalisation préféré, la bague de liaison aura un contour extérieur cylindrique emboîté dans un alésage correspondant du moyeu, sa rotation dans cet alésage étant angulairement limitée par au moins une nervure radiale pouvant osciller dans une rainure correspondante légèrement plus large du moyeu, une nervure radiale plus importante étant disposée dans une cavité plus large du moyeu, dans sa partie s'étendant par exemple dans l'axe du bras, des moyens élastiques d'amortissement d'appui étant interposés entre les parois radiales de la nervure et les parois radiales opposées de la cavité. Ces moyens élastiques assurent également le calage angulaire théorique prévu pour la pose initiale et le maintien de la bague, facilitant la mise en place du bras sur l'arbre dans sa position de centrage théorique et son maintien en position lors de l'assemblage.

On disposera alors d'une plage de réglage de position angulaire du bras contrôlée, en appui élastique. Le bras sera bloqué, comme précédemment, par serrage de l'écrou d'assemblage avec rondelle de blocage après mise en position.

De préférence, une coque externe métallique forme un boîtier autour du moyeu.

Le bras selon l'invention a une extrémité d'assemblage sur l'axe de pivotement constituée en une structure composite caractérisée par une coque externe, préférentiellement en tôle emboutie, formant un boîtier d'entraînement du bras d'essuie-glace, boîtier ouvert en dessous dont le dessus est percé d'un trou de passage de l'axe de pivotement et recevant des moyens de blocage du bras sur l'axe de pivotement tels qu'un écrou avec rondelle de blocage ou une vis d'assemblage, suivant les types d'assemblage concernés, ce boîtier contenant une forme ou moyeu rapporté en matériau par exemple moulé, tel qu'un matériau plastique, ou Zamak, Aluminium, Magnésium, etc... pouvant recevoir des moyens de réglage de positionnement angulaire du bras et venant s'emboîter solidairement dans le boîtier, avec des formes complémentaires de celles dudit boîtier assurant la solidarisation du moyeu dans le boîtier et leur blocage mutuel en rotation. Le moyeu peut également être rendu solidaire du boîtier par d'autres moyens tels que surmoulage, goupillage, sertissage, clipsage, rivetage.

Cette structure composite allie les facilités de mise en forme complexe et précise par moulage du moyeu avec une résistance suffisante apportée par l'enrobage de tôle d'acier du boîtier qui agit comme une frette de renfort du moyeu et de ses mécanismes de réglage et d'assemblage et comme organe de liaison particulièrement rigide avec le bras d'essuie-glace, et notamment applicable aux bras de grande longueur.

La forme la plus simple d'un tel moyeu composite, qui pourra s'appliquer notamment à l'emboîtement sur des axes à portée tronconique striée, selon la technique connue, mais dont l'alésage se prolonge, à partir de la grande base du tronc de cône ou de son prolongement torique, par un manchon de guidage s'emboîtant sur la tige de l'axe et garantissant la perpendicularité de l'assemblage. Cette première application, remédie ainsi au principal défaut des assemblages sur axes à stries sur portée tronconique.

En variante, le moyeu comportera un alésage à portée tronconique dont la grande base pourra éventuellement se raccorder à la tige cylindrique de l'arbre de pivotement par une surface de raccordement torique formant butée et assurant ainsi un meilleur calage axial à l'emboîtement du moyeu du bras, à surface initialement lisse sur laquelle viendront s'imprimer les stries de l'axe. On renforce ainsi l'ajustement sur portée tronconique. La portée tronconique lisse du moyeu comporte sur sa grande base un arrondi dont la surface torique vient s'emboîter en butée sur une surface torique striée de forme complémentaire prolongeant les stries de la portée tronconique de l'axe jusqu'à son diamètre extérieur.

Afin d'améliorer la tenue en rotation de l'emboîtement tronconique, les stries réalisées sur le tronc de cône de l'arbre, au lieu d'être régulièrement réparties comme il est d'usage, pourraient être réparties de façon irrégulière ou aléatoire de façon à ce qu' au moins un certain nombre d'entre elles retrouvent une bonne position d'emboîtement dans certaines stries préalablement marquées dans la portée tronconique lisse du bras lors du premier montage.

En effet, avec des stries régulièrement réparties, si l'on décale par exemple d'une demi-dent l'arbre par rapport aux stries imprimées dans le bras, c'est la totalité des pointes des dents de l'arbre qui se retrouvent en face de la totalité des pointes des dents qui ont été imprimées lors du premier assemblage dans le moyeu. Ceci ne peut pas se produire avec des stries irrégulièrement réparties car au moins une partie d'entre elles se trouveront en bonne position.

Avantageusement, la perpendicularité du bras par rapport à l'axe de pivotement est assurée par l'embase de butée qui vient en butée sur une portée transversale de l'axe.

Le contrôle de perpendicularité du bras sera avantageusement assuré par cette embase de butée, pouvant être réalisée en métal fritté, dont le trou central aura une surface striée venant s'emboîter dans la portée striée de l'axe, ladite embase venant en butée sur le fond de cette portée, ce qui assure sa perpendicularité et son positionnement axial par rapport à l'axe par un assemblage autobloquant sans coincement, ainsi que la perpendicularité du moyeu qui prend appui sur cette embase de butée, dont la surface circulaire munie d'un épaulement de centrage du moyeu ferme la cavité du moyeu contenant les moyens de réglage angulaire du bras.

Afin de limiter un fluage par écrasement du moyeu lors du serrage contre la butée, les flancs du boîtier auront une hauteur prédéterminée par rapport au moyeu et prendront appui contre l'embase de butée en maintenant la pression d'assemblage souhaitée.

Pour les assemblages sur des axes à portée striée cylindrique, le contrôle de perpendicularité du bras y est assuré par une embase de butée, pouvant être réalisée en métal fritté, dont le trou central a une surface striée venant s'emboîter sur la portée striée de l'axe, ladite embase venant en butée sur la fin de cette portée, ce qui assure sa perpendicularité et son positionnement axial par rapport à l'axe par un assemblage autobloquant sans coincement, ainsi que la perpendicularité du moyeu qui prend appui sur cette embase de butée, dont la surface circulaire munie de son épaulement de centrage ferme la cavité du moyeu contenant les moyens de réglage angulaire du bras.

De préférence, les flancs du boîtier ont une hauteur telle par rapport au moyeu qu'ils prennent appui contre l'embase de butée.

Avantageusement, le boîtier et le moyeu ont une forme et les flancs du boîtier ont une hauteur par rapport au moyeu telles que le fond et les flancs du boîtier prennent appui sur le dessus du moyeu et sur ses flancs, respectivement, ledit moyeu étant lui-même en appui sur l'embase de butée, les flancs du moyeu étant striés..

De préférence, la bague de liaison est rendue solidaire en rotation de l'axe par des moyens de coopération, ou de complémentarité, de formes.

Avantageusement, ces moyens de coopération de formes sont constitués par des stries.

De préférence, ces moyens de coopération de formes sont constitués par des polygones, avantageusement des carrés.

Avantageusement, les moyens de coopération de formes sont portés l'un directement par la bague de liaison, l'autre par l'axe.

De préférence, la bague de liaison est rendue solidaire en rotation de l'axe par l'intermédiaire de l'embase de butée, les moyens de coopération de formes étant portés l'un par l'embase de butée, l'autre par la portée transversale de l'axe, des moyens complémentaires, avantageusement indexés, étant prévus pour l'entraînement de la bague de liaison par l'embase de butée.

Avantageusement, l'axe comporte, comme dispositif dit de "détrompage", des absences de ses stries laissant subsister des creux, alors que la bague de liaison du moyeu du bras comporte parmi ses stries des stries dites de détrompage sans creux entre elles, les pleins en résultant correspondant aux creux des stries manquantes de l'arbre, l'embase de butée comportant la totalité de ses stries.

De préférence, la nervure radiale comporte une partie terminale élastique susceptible de prendre appui sur une partie de la paroi correspondante du logement radial.

Ainsi, le bras d'essuie-glace selon l'invention sera assemblé sur l'extrémité filetée de son axe de pivotement, de façon connue en soi, par blocage par écrou et rondelle appropriés dans un trou du moyeu d'extrémité du bras contre une embase de butée d'appui solidaire de l'axe de pivotement, ce moyeu d'extrémité comportant sur sa face d'appui de blocage un logement dans lequel vient s'emboîter une bague de liaison bloquée en rotation sur l'extrémité de l'axe de pivotement mais libre en rotation d'amplitude limitée et contre une résistance d'appui élastique, cet assemblage étant caractérisé en ce que la bague de liaison comporte au moins une nervure radiale flexible disposée dans un logement correspondant du moyeu recevant la bague de liaison, la rotation en appui élastique du bras d'essuie-glace par rapport à son axe de pivotement et à la bague de liaison étant assurée par une flexion élastique de cette nervure radiale en appui contre la paroi correspondante de son logement.

Avantageusement, la flexion élastique de la nervure radiale est assurée en disposant une forme en saillie à son extrémité, qui prend seule appui sur la paroi de son logement et permet une libre flexion de la nervure dans ce logement.

De préférence, la nervure radiale comporte au moins une patte de flexion.

Avantageusement, la longueur des pattes de flexion est inférieure à la profondeur radiale du logement, la base de la nervure formant une butée en appui sur une partie de la paroi correspondante du logement limitant le déplacement angulaire du bras lors de son réglage de mise en place ou en cas de desserrage.

Avantageusement, il est disposé sur la périphérie de la bague de liaison au moins une nervure de butée de déplacement angulaire.

De préférence, l'emboîtement de la bague de liaison dans la cavité correspondante du moyeu de bras d'essuie-glace comporte une dépouille.

Avantageusement, la dépouille du contour externe de la bague de liaison et des parois correspondantes de la cavité du moyeu est au moins égale ou supérieure aux dépouilles d'inclinaison du moyeu de bras permettant son démoulage direct.

De préférence, les moyens de blocage comprennent un écrou et une rondelle de blocage maintenus en position sur la face externe du moyeu de bras d'essuie-glace par un bourrelet de centrage qu'elle présente et qui est concentrique au trou de sortie de l'extrémité filetée de l'axe.

Avantageusement, il est constitué en un sous-ensemble pré-assemblé en extrémité de bras d'essuie-glace, comportant d'une part un écrou et une rondelle de blocage, maintenus en position sur la face externe du moyeu de bras d'essuie-glace par une fourchette de maintien comportant deux dents supérieures prenant appui sur la rondelle de part et d'autre de l'écrou, et également deux dents inférieures prenant appui sur l'embase de butée de part et d'autre de son trou d'engagement sur l'axe, les dents inférieures étant reliées par une forme en demi-tronc de cône formant entonnoir facilitant le guidage d'engagement de l'extrémité de l'axe dans le trou de l'embase de butée,

De préférence, la distance de la face d'appui de la bague de liaison sur l'embase de butée jusqu'à l'entrée du taraudage de l'écrou est supérieure à la distance entre l'entrée des moyens de complémentarité de formes portés par l'axe et le sommet du filetage de l'arbre, de façon à pouvoir engager les moyens de complémentarité de formes de la bague sur les moyens de complémentarité de formes de l'axe avant de visser l'écrou.

Avantageusement, la distance de la face d'appui de l'embase de butée sur la portée transversale de l'axe jusqu'à l'entrée du taraudage de l'écrou est supérieure à la distance entre l'entrée des moyens de complémentarité de formes portés par l'axe et le sommet du filetage de l'arbre, de façon à pouvoir engager les moyens de complémentarité de formes de l'embase de butée sur les moyens de complémentarité de formes de l'axe avant de visser l'écrou.

L'invention concerne également l'élimination du bruit du balayage des essuie-vitres, dû à leur efficacité variable en fonction de leur pression d'appui sur le pare-brise. Ce bruit peut provenir d'une inclinaison mal maîtrisée de la lame de caoutchouc par rapport à la surface du pare-brise, à laquelle peut s'ajouter un excès de pression du ressort d'appui du bras. Elle a alors tendance à brouter et à faire vibrer l'ensemble du bras.

La forme bombée du pare-brise peut également s'avérer variable d'un fournisseur à l'autre et il peut être intéressant de modifier la pression d'appui en augmentant la tension du ressort plutôt que d'ajouter un déflecteur dont l'effet aérodynamique augmenterait cette pression d'appui.

Selon un mode de réalisation de l'invention, on résoudra ce problème en articulant l'embase de butée sur l'axe de façon à ce qu'elle puisse être réglée, soit dans sa position normale perpendiculaire à son axe d'assemblage, soit décalée d'un certain angle, positif ou négatif, par rapport à cette position.

Avantageusement, la portée transversale de l'axe d'entraînement sur laquelle vient s'emmancher la butée comporte au moins deux méplats diamétralement opposés, limités en longueur par des surfaces d'épaulement, concaves et munies de crans perpendiculaires à l'axe et parallèles entre eux, l'embase de butée s'emmanchant sur la portée de l'axe de pivotement avec un jeu permettant son inclinaison par rapport à sa position normale perpendiculaire, et comportant des surfaces d'appui convexes et crantées s'emboîtant sur les surfaces d'épaulement concaves et crantées de l'axe d'entraînement, l'emboîtement mutuel des crans des surfaces d'appui assurant le maintien de la position d'inclinaison choisie pour la butée lors de son montage.

De préférence, les surfaces d'épaulement de l'axe et les surfaces d'appui de la butée sont des segments de surfaces cylindriques d'un cylindre dont l'axe rencontre l'axe de pivotement, perpendiculairement à celui-ci.

Avantageusement, les surfaces d'épaulement de l'axe et les surfaces d'appui de la butée sont des secteurs d'une sphère dont le centre est sur l'axe de pivotement et forment un assemblage du type à rotule bloqué par les emboîtements des crans, dont le calage à 90° permet un glissement longitudinal des crans emboîtés pour permettre le réglage du calage des jeux de crans perpendiculaires.

Deux solutions de réglage peuvent être envisagées:
- La plus simple, notamment lors du montage en usine, consiste à ne régler qu'un seul facteur à la fois, soit la tension du ressort d'appui de la lame de caoutchouc du balai, soit l'inclinaison de cette lame, ce qui sera obtenu avec le même axe, la même butée et la même bague de réglage, donc sans modification de pièces, en faisant pivoter de 90° l'orientation de l'axe par rapport à sa biellette d'entraînement, en fonction du réglage recherché lors du montage sur le véhicule, par calage d'inclinaison du bras sur deux surfaces d'appui opposées concaves et convexes crantées de la butée sur l'axe.
- La deuxième solution permettra simultanément de faire:
- Le réglage de la pression d'appui.
- Le réglage d'inclinaison de la lame caoutchouc.
- Le réglage combiné des deux à la fois.

En effet, il peut être par exemple intéressant de donner un angle positif ou négatif à la lame caoutchouc, tout en étant en mesure de rester neutre ou d'augmenter ou d'allèger la pression d'appui.

Dans ce cas, deux jeux de surfaces d'épaulement concaves et crantées sur l'axe et d'appui convexe et crantées sur l'embase de butée seront utilisés, formant une surface d'appui composée de secteurs d'une calotte sphérique centrée sur l'axe de pivotement et permettant un réglage d'inclinaison du type rotule de l'embase de butée, le double jeu d'emboîtements crantés assurant son maintien dans la position choisie.

On notera que cette solution de réglage de position de balayage à partir du positionnement de l'embase de butée d'appui reste d'une grande simplicité et d'un faible coût, les formes des surfaces d'appui et les crantages étant aisément obtenues par frappe à froid sur l'axe et par frappe à froid ou frittage sur la butée.

De préférence, l'axe de pivotement comporte quatre méplats lui donnant une section carrée sur laquelle est emmanchée l'embase de butée dont la base d'appui est inclinée, et qui transmet cette inclinaison à la bague de liaison, bloquée en position de rotation sur la base d'appui de l'embase de butée par les moyens complémentaires constitués de quatre languettes sur lesquelles elle s'emboîte, des calages angulaires différents de la bague de liaison et donc du bras d'essuie-glace étant obtenus par une modification du calage de l'embase de butée de 90° ou 180° sur son carré d'emboîtement sur l'axe.

Avantageusement, on interpose, entre l'embase de butée et la base de son carré d'emboîtement sur l'axe, une rondelle comportant sur sa face d'appui de l'embase de butée une surface crantée concave sur laquelle viendra prendre appui une surface crantée convexe de l'embase de butée.

Le jeu d'assemblage entre le moyeu et la bague pouvant permettre une variation de calage angulaire de l'ordre de plusieurs degrés, suffisant pour règler un positionnement de balais d'essuie-glace, pourra être assuré par un jeu d'emboîtement de la bague de liaison dans sa cavité du moyeu suivant un contour ne permettant pas la rotation de cette bague dans sa cavité tel qu'un contour polygonal limitant la possibilité de déplacement angulaire. Après mise en position angulaire souhaitée du bras, l'empilage du moyeu et du boîtier sera bloqué en position contre l'embase de butée par serrage de l'écrou et de sa rondelle de blocage du bras en extrémité de l'axe.

Un tel dispositif sera avantageusement constitué en un sous-ensemble pré-assemblé en extrémité de bras d'essuie-glace et comportant d'une part l'écrou et sa rondelle de blocage, maintenus en position sur la face externe du boîtier, par exemple par des pattes de calage aménagées dans la tôle du boîtier ou par une rondelle équipée de pattes munies de griffes de retenue, face au trou de sortie de l'extrémité filetée de l'axe, et d'autre part l'ensemble embase de butée, bague de liaison et ressort de calage fixé par clipsage dans la cavité correspondante du moyeu, lui-même rendu solidaire du boîtier par des plots thermosoudés dans des trous correspondants de la tôle du boîtier. Au démontage, le dévissage de l'écrou, retenu par les pattes d'assemblage, agira comme extracteur pour faciliter, sans nécessiter d'autre outillage, le démontage du sous-ensemble complet.

Lors de la mise en place de ce sous-ensemble de bras ainsi préassemblé sur l'extrémité de l'arbre, la distance de la face d'appui de la bague de liaison sur l'embase de butée jusqu'à l'entrée des stries de l'arbre sera avantageusement supérieure à la distance entre l'entrée du taraudage de l'écrou et le sommet du filetage de l'arbre, de façon à pouvoir engager les stries de la bague sur l'arbre avant de visser l'écrou. Ainsi, la bague est engagée sur les stries de l'arbre avant que l'écrou n'arrive en butée sur l'extrémité du filetage de l'arbre de façon à maintenir angulairement le bras sur l'arbre, laissant ainsi à l'opérateur la possibilité de ne plus avoir à maintenir le bras en position et donc d'avoir les deux mains libres pour poser le deuxième bras et pouvoir assurer simultanément le réglage et le blocage des deux bras

En montage sur chaîne d'assemblage, l'opérateur n'aura plus qu'à mettre en place ce sous-ensemble en l'ajustant sur la partie striée de l'axe.

Avantageusement, la longueur d'emboîtement du moyeu de bras d'essuie-glace, comprenant la longueur d'engagement sur l'axe de l'ensemble embase de butée et bague de liaison, est importante de telle sorte qu'elle permet le maintien du moyeu sur l'axe ainsi que l'arc-boutement du moyeu, assurant ainsi l'appui de la lame d'essuie-glace sur le pare-brise.

Puis l'opérateur n'aura plus qu'à placer d'une main le bras d'essuie-glace dans la position souhaitée et en maniant de l'autre main sa visseuse, à assurer le serrage de l'écrou et le blocage en position du bras. Le temps de montage sera ainsi réduit au maximum et ce réglage pourra ultérieurement être répèté en toutes circonstances.

Afin d'éviter les erreurs d'orientation du bras lors de sa mise en place comme indiqué ci-dessus, il est prévu un dispositif dit de "détrompage" ne permettant le montage du moyeu du bras sur les stries de l'arbre que dans une seule position. A cet effet, l'arbre comporte des absences de stries laissant subsister des creux, ce qui permet de monter la butée, munie d'un jeu complet de stries, dans n'importe quelle orientation, ce qui en facilite l'assemblage alors que la bague de liaison du moyeu du bras comporte des stries dites de détrompage sans creux entre elles, les pleins en résultant correspondant aux creux des stries manquantes de l'arbre, il en résulte que la bague de liaison ne peut être montée que dans une seule position d'indexage, la seule position théorique désirée à partir de laquelle pourra s'effectuer un ajustement final de l'orientation du bras au niveau des butées angulaires de la bague de liaison dans leurs cavités plus larges munies de moyens élastiques aménagées dans le moyeu du bras, comme précédemment décrit.

Ce mode de réalisation d'une structure de bras d'essuie-glace présente une bonne sécurité de positionnement du bras sur son axe, y compris après démontage, et permet si nécessaire un réglage de positionnement angulaire précis, tout en restant d'un faible coût et compatible avec les axes d'assemblage existants sur lesquels ce bras se montera par une seule opération d'assemblage rapide et moins dépendante du facteur humain sur les chaînes de montage de véhicules avec un ajustement éventuel aisé du calage angulaire du bras d'essuie-glace.

La flexion élastique de la nervure radiale sera avantageusement assurée en disposant une forme en saillie telle qu'un bourrelet a son extrémité, qui prendra seule appui sur la paroi de son logement et permettra une libre flexion de la nervure dans ce logement. Pour combiner une souplesse de flexion avec une résistance mécanique suffisante, la nervure radiale sera composée de plusieurs pattes de flexion parallèles ayant une même souplesse de flexion, mais dont les résistances à la flexion s'ajouteront. Ces pattes pourront être moins longues que la nervure, dont la base plus massive formera alors une butée limitant le déplacement angulaire du bras lors de son réglage de mise en place. On peut également prévoir sur la périphérie de la bague de liaison une ou plusieurs petites nervures massives, suivant la résistance souhaitée, assumant cette fonction de butée de limitation de déplacement angulaire. On dispose ainsi, par un dimensionnement approprié de la bague de liaison et de sa ou ses nervures, d'une grande possibilité d'adaptation de la structure d'assemblage.

Dans une telle configuration, la bague de liaison doit concilier les exigences de souplesse de matériau permettant la déformation élastique en flexion de la nervure radiale et la résistance mécanique suffisante des stries de son alésage venant s'emboîter sur les stries correspondantes de l'axe de pivotement. Selon une autre caractéristique de l'invention, l'emboîtement de la bague de liaison dans la cavité correspondante du moyeu comportera une dépouille.

En plus de sa fonction classique de faciliter le moulage, cette dépouille aura pour résultat, lors du blocage du bras sur l'axe de pivotement comprimant la bague de liaison dans son logement, d'exercer une composante de pression perpendiculaire à l'axe de pivotement résultant en un effet de frettage de cette bague de liaison sur l'axe de pivotement, ce qui renforce sensiblement la résistance de l'assemblage sur les stries. De plus, cette dépouille permet d'éviter une complication, par des parties démontables, de l'outillage de coulée sous pression du bras, lorsque celui-ci a une forme gauche nécessitant un plan de démoulage incliné par rapport à l'axe de pivotement. Une dépouille du contour externe de la bague de liaison et des parois correspondantes de son logement au moins égale ou supérieure à cette inclinaison permettra le démoulage direct du bras sans adjonction d'éléments mobiles supplémentaires dans le moule.

Ainsi, la fixation de bras d'essuie-glace selon l'invention permettra, par un ajustement dimensionnel de la bague de liaison en fonction du matériau choisi et des contraintes de fonctionnement, de l'adapter aisément, pour un coût modéré, à tous types d'essuie-glace.

Comme on l'aura compris, l'invention permet :
- d'assurer de façon sûre l'entraînement de l'essuie-glace, même en cas de mauvais serrage,
- d'obtenir un montage incompressible maintenu en tension d'assemblage par un moyen élastique de compresssion,
- d'obtenir une perpendicularité parfaite et une position axiale précise du bras sur son axe,
- de transmettre des couples d'entraînement importants et d'avoir une rigidité supérieure aux bras existants,
- de pouvoir être démonté sans outil spécial et remonté rapidement et à coup sûr sans possibilité d'erreur dans la même position autant de fois que nécessaire pendant toute la durée de vie du véhicule,
- de permettre la modification des trois réglages possibles (plage de balayage, vrillage, pression de la lame) sans la dépose d'aucune pièce, y compris l'écrou de serrage et sa rondelle,
- de ne pas nécessiter de modifications des techniques de fabrication existantes tout en améliorant le mode de montage sur chaîne,
- de permettre au bras d'essuie-glace de s'auto-maintenir dans sa position théorique sur l'arbre avant serrage de l'écrou, de façon à laisser à l'opérateur les mains libres,
- d'être montable indifféremment sur les principaux diamètre d'arbres existants.

Pour mieux faire comprendre l'objet de l'invention, on va en décrire maintenant, à titre d'exemples, purement illustratifs et non limitatifs, des modes de réalisation représentés sur les dessins annexés.

Sur ces dessins :
- la figure 1 montre en coupe axiale partielle, selon I de la figure 2, un moyeu de bras composite selon l'invention adapté au montage sur un axe à stries d'assemblage sur portée tronconique ;
- la figure 2 est une vue en coupe axiale selon II de la figure 1 ;
- la figure 3 est une vue analogue à la figure, en coupe selon III-III de la figure 4 ;
- la figure 4 est une vue en coupe selon IV-IV de la figure 3 ;
- la figure 5 est une vue de dessus du bras seul ;
- la figure 6 montre, en coupe selon VII-VII de la figure 8, une variante d'assemblage de bras selon l'invention ;
- la figure 7 représente l'axe seul en élévation ;
- la figure 8 représente une vue en coupe selon VIII-VIII de la figure 6 ;
- la figure 9 montre en coupe axiale selon IX-IX de la figure 10 une variante de bras selon l'invention ;
- la figure 10 est une vue en coupe selon X-X de la figure 9 ;
- les figures 11, 12 et 13 montrent la bague de liaison correspondante ;
- la figure 14 montre l'extrémité vue de dessous du bras représenté aux figures 9 et 10 montrant le logement de la bague de liaison et la surface d'appui restante pour son contact d'appui sur l'embase de butée d'appui d'assemblage sur l'axe ;
- la figure 15 est une vue de dessous du bras ;
- la figure 16 montre une bague de liaison selon les figures 11 à 13 en flexion dans son logement de bras lors du réglage de position angulaire de ce dernier ;
- les figures 17 à 19 montrent en coupe partielle une coque externe de bras, les figures 17 et 19 étant respectivement des vues en coupe selon XVII-XVII et XIX-XIX de la figure 18 ;
- les figures 20 à 22 montrent en coupe partielle un moyeu adapté à coopérer avec la coque des figures 17 à 19, les figures 20 et 22 étant respectivement des vues en coupe selon XX-XX et XXII-XXII de la figure 21 ;
- la figure 23 est une vue analogue aux figures 1, 3 ou 6, en coupe selon XXIII-XXIII de la figure 24, et représente une variante ;
- la figure 24 est une vue en coupe selon XXIV-XXIV de la figure 23 ;
- les figures 25 à 27 représentent la bague seule du dispositif des figures 23 et 24, la figure 26 étant une vue en coupe selon XXVI-XXVI de la figure 27 ;
- la figure 28 est une vue analogue à la figure 6 et correspond à une variante ;
- la figure 29 est une vue en coupe selon XXIX-XXIX de la figure 28 ;
- la figure 30 est analogue à la figure 28 et montre une autre position de l'embase de butée ;
- la figure 31 est analogue à la figure 28 et correspond à une variante ;
- les figures 32 et 33 montrent l'embase de butée seule de la figure 31, la figure 32 étant une vue en coupe selon XXXIV-XXXIV de la figure 33 ;
- la figure 34 est une vue analogue à la figure 32 et montre une variante ;
- les figures 35 et 36 montrent une variante d'embase de butée adaptée à coopérer avec une rondelle selon les figures 37 et 38 ;
- les figures 39 à 42 sont des vues analogues aux figures 35 à 38 et correspondent à une variante ;

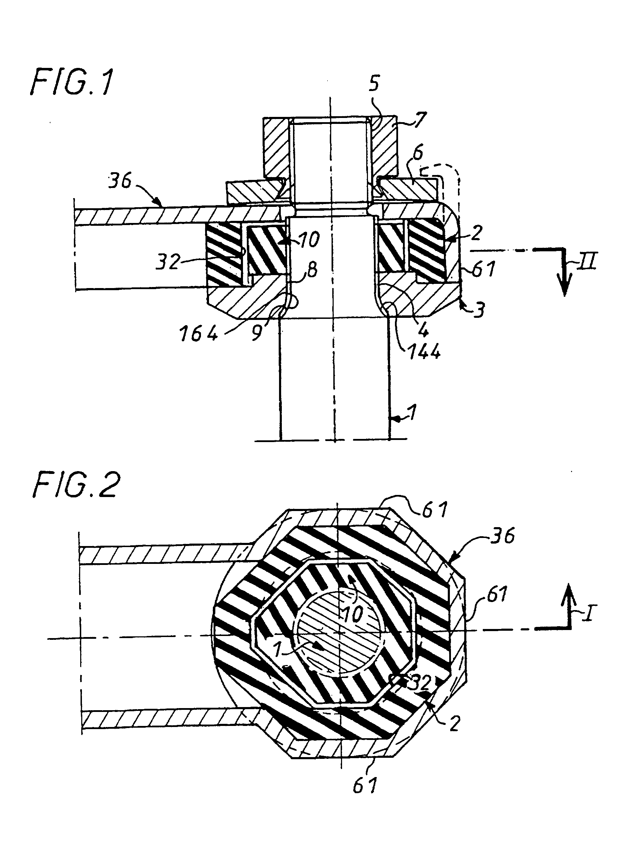

En se reportant aux figures 1 et 2, on voit un assemblage d'extrémité de bras selon l'invention sur un axe de pivotement 1 du type à stries sur portée cylindrique. Le moyeu 2 en matériau plastique est emboîté dans un boîtier 36 en tôle avec lequel il est solidarisé par tous moyens appropriés, non représentés, tels que goupillage, plots de thermoformage, ou autres. Ce moyeu 2 prend appui sur une embase de butée 3, qui pourra être en acier fritté, comportant un trou central 8 muni de stries complémentaires de celles d'une portée 4 de l'axe 1 ; la zone de raccordement 9 de la portée striée de l'axe 1 à sa partie lisse porte également des stries 144 sur lesquelles vient s'emboîter l'embase de butée 3 grâce à des stries 164, avec effet autobloquant sans coincement, cet emboîtement garantissant sa perpendicularité et sa position axiale avec l'axe 1, et donc celle du bras d'essuie-glace, laquelle zone à stries 144 de l'axe 1 constituant la portée transversale de l'axe 1.

Une bague de liaison 10 entre l'axe 1 et le moyeu 2 comporte comme précédemment un alésage à surface striée venant s'emboîter sur la portée striée de l'axe 1 et dont la surface externe a un contour polygonal venant se placer dans une cavité 32, ici polygonale, du moyeu 2 avec un certain jeu d'emboîtement permettant un déplacement angulaire relatif limité, de l'ordre de 3 degrés d'angle entre la bague 10 et le moyeu 2 et suffisant pour un ajustement de position du balai d'essuie-glace. Avant blocage par l'écrou 7 et la rondelle 6, le bras pourra, grâce au jeu précité, être placé dans la position angulaire souhaitée. Un exemple de contour polygonal avec jeu, ici un contour octogonal, est visible sur la figure 2.

Après réglage de la position angulaire du bras, un blocage de l'écrou 7, sur sa rondelle attenante 6 recouvrant l'orifice circulaire sur le fond du boîtier 36, assurera le blocage en position angulaire, et la perpendicularité, du bras par appui du moyeu 2 sur l'embase de butée 3. Afin de limiter un fluage par écrasement du moyeu 2 lors de son serrage contre l'embase de butée 3, les flancs 61 du boîtier 36 auront une hauteur prédéterminée par rapport au moyeu 2 et prendront appui contre l'embase de butée 3 en maintenant la pression d'assemblage souhaitée.

On notera qu'en cas de desserrage accidentel de l'écrou 7, le bras d'essuie-glace continuera à fonctionner. Le jeu de battement libéré par le desserrage, provoquant des chocs additionnels en fin de course de balayage, avertira aussitôt le conducteur du défaut.

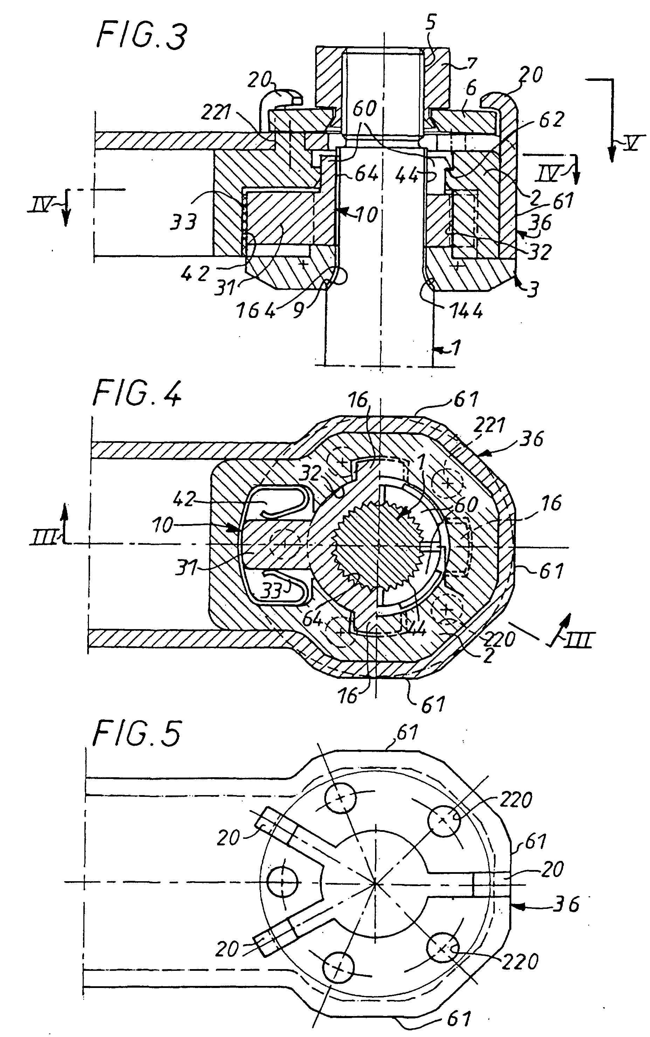

Les figures 3, 4 et 5 montrent une variante du précédent type de réglage angulaire par jeu d'assemblage limité radialement où la bague de liaison 10 a une forme extérieure circulaire cylindrique emboîtée dans la cavité 32 du moyeu 2 et comporte au moins une nervure 31 dépassant de cette forme cylindrique et logée avec un certain jeu radial et angulaire dans un logement radial 42 correspondant du moyeu 2. Une telle nervure 31, de relative grande dimension, sera avantageusement placée dans un grand logement du moyeu 2, par exemple dans un prolongement du moyeu 2 dans l'axe du bras d'essuie-glace, comme visible sur la figure 4 ; ce grand dimensionnement permet d'interposer entre la nervure 31 de la bague de liaison 10 et les parois du logement 42 du moyeu 2 un moyen élastique tel qu'un ressort 33. Ce moyen élastique 33 sert simultanément à immobiliser la bague 10, en la maintenant au point théorique de réglage et à amortir les chocs de fin de course en cas de déblocage accidentel.

Le boîtier 36 comporte des pattes d'assemblage 20, réalisées de préférence par découpe de sa tôle lors de sa mise en forme, qui seront ensuite rabattues sur les bords de la rondelle de blocage 6, elle-même solidarisée à l'écrou 7 par une collerette repoussée que présente celui-ci. Des trous 220, figure 5, du boîtier 36 reçoivent des plots cylindriques 221 moulés avec le moyeu 2 et fondus ensuite dans ces trous par thermoformage, assurant ainsi la solidarisation du moyeu 2 et du boîtier 36.

L'écrou 7 et sa rondelle de blocage 6 peuvent être également maintenus en position sur la face externe du boîtier 36 par un élément formant rondelle de clipsage, équipé de pattes munies à leurs extrémités de crochets s'emboîtant dans des orifices aménagés sur le fond ou à la périphérie du boîtier 36.

La bague de liaison 10 comporte à sa partie supérieure, à l'opposé de sa face d'appui sur l'embase de butée 3, un manchon fendu 60 muni sur son rebord externe d'une collerette de clipsage 62 venant s'engager contre un rebord correspondant du moyeu 2 et assurant le maintien de la bague de liaison 10 et de son ressort 33 dans leurs logements correspondants du moyeu 2 avant l'emboîtement sur l'axe 1.

Les éléments d'assemblage précédemment décrits permettent de préassembler le bras d'essuie-glace selon l'invention en un sous-ensemble prêt à être monté et ajusté sur son axe avec un minimum d'opérations, ce qui économise un temps précieux sur une chaîne de montage. Le bras ainsi préassemblé et muni de son embase de butée 3 est alors emboîté sur l'axe 1, au mieux de sa position finale, jusqu'au contact de la portée filetée 5 sur le premier filet de l'écrou 7, les stries de l'axe 1 et de la bague de liaison 10 étant également engagées sur une certaine longueur. L'opérateur peut alors maintenir d'une main le bras d'essuie-glace dans la position angulaire souhaitée et de l'autre main engager sa visseuse sur la tête de l'écrou 7 et procéder au blocage de l'assemblage.

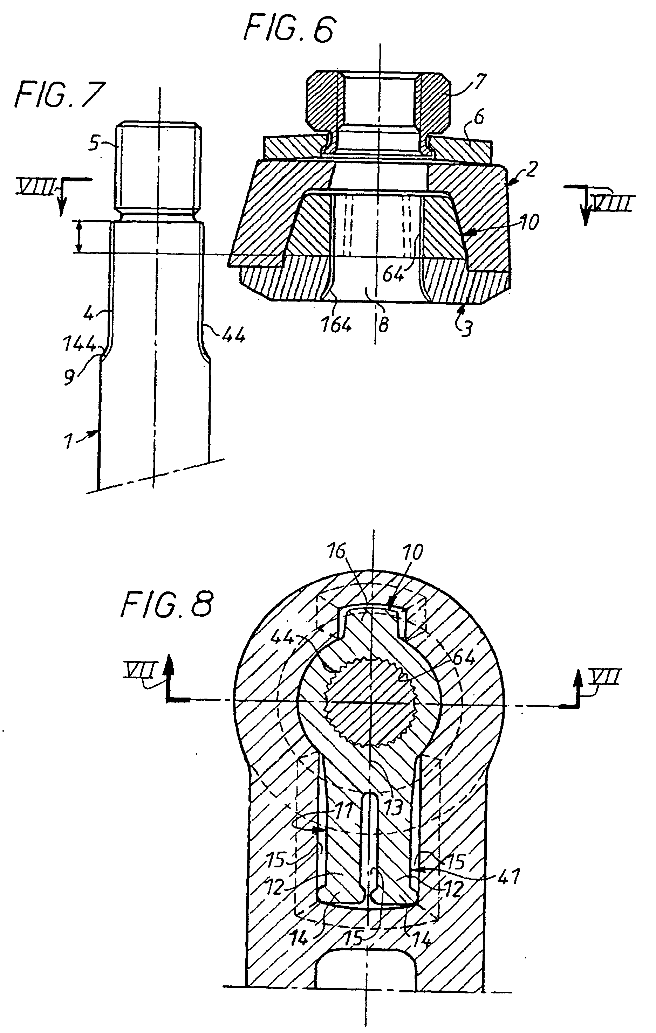

En se reportant aux figures 6 et 7, on reconnaît une extrémité de bras d'essuie-glace 2, figure 6, destinée à être assemblée, avec un axe 1, figure 7, du type à portée cylindrique striée 4 se raccordant à une extrémité filetée 5 destinée à recevoir une rondelle 6 et un écrou de blocage 7 de l'extrémité du bras d'essuie-glace 2 dont la face opposée vient prendre appui sur une embase de butée 3 qui sera rendue solidaire de l'axe 1 par emboîtement de son trou central strié 8 sur la portée transversale 9 à stries 144 de l'axe 1. Sur la partie centrale de l'embase de butée 3 vient prendre appui la bague de liaison 10 solidaire en rotation de l'axe 1 par emboîtement de son alésage strié sur la portée striée 4 de l'axe 1. Cette bague de liaison est emboîtée dans un logement correspondant aménagé sur la face d'appui de l'extrémité du bras d'essuie-glace 2.

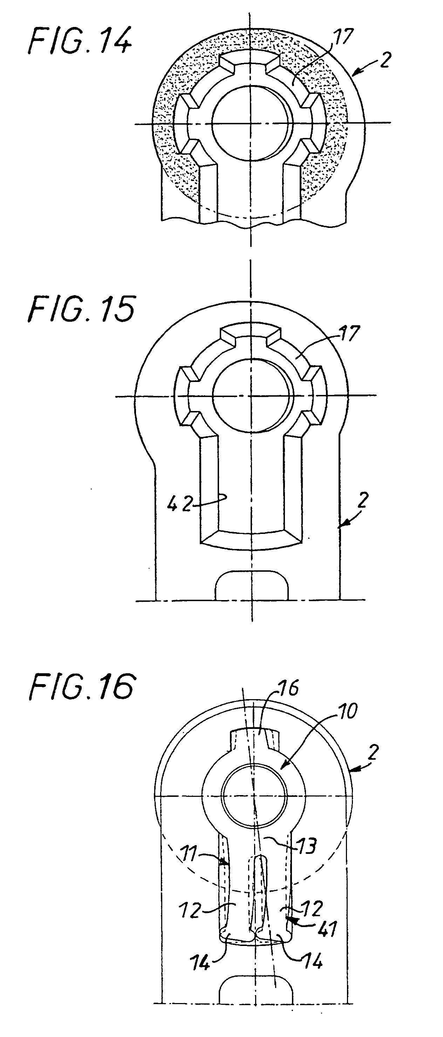

La figure 8 montre l'emboîtement de la bague de liaison 10 sur les stries 44 de l'axe 1, d'une part, et dans son logement dans l'extrémité de bras d'esssuie-glace 2, d'autre part. Dans cet exemple selon l'invention, la bague de liaison 10 comporte une nervure radiale 11 munie de deux pattes minces 12 permettant sa flexion élastique jusqu'à ce que sa base massive 13, à laquelle se raccordent les pattes 12, vienne en appui de butée (figure 16) contre la paroi du logement 42. La partie terminale 41 des pattes 12 comporte des saillies 14 en forme de bourrelets pour contact avec la paroi du logement déterminant les points d'appui de flexion. Des espacements 15 sont aménagés le long des pattes 12 pour ne pas entraver leur flexion. Une butée supplémentaire, sous la forme d'une courte nervure de butée 16, est aménagée à l'opposé de la nervure de flexion élastique 11. Le contour pointillé 17 résulte des parois en dépouille du logement de la bague 10.

Cet assemblage, montré en position de flexion des pattes de la nervure à flexion élastique, peut absorber un réglage de position angulaire du bras d'essuie-glace par rapport à son axe de pivotement qui pourra être de l'ordre de plus ou moins 3°, ce qui représente un déplacement de plus ou moins 3 cm en bout d'un bras d'essuie-glace de 60 cm, couvrant ainsi largement les dispersions d'assemblage à compenser.

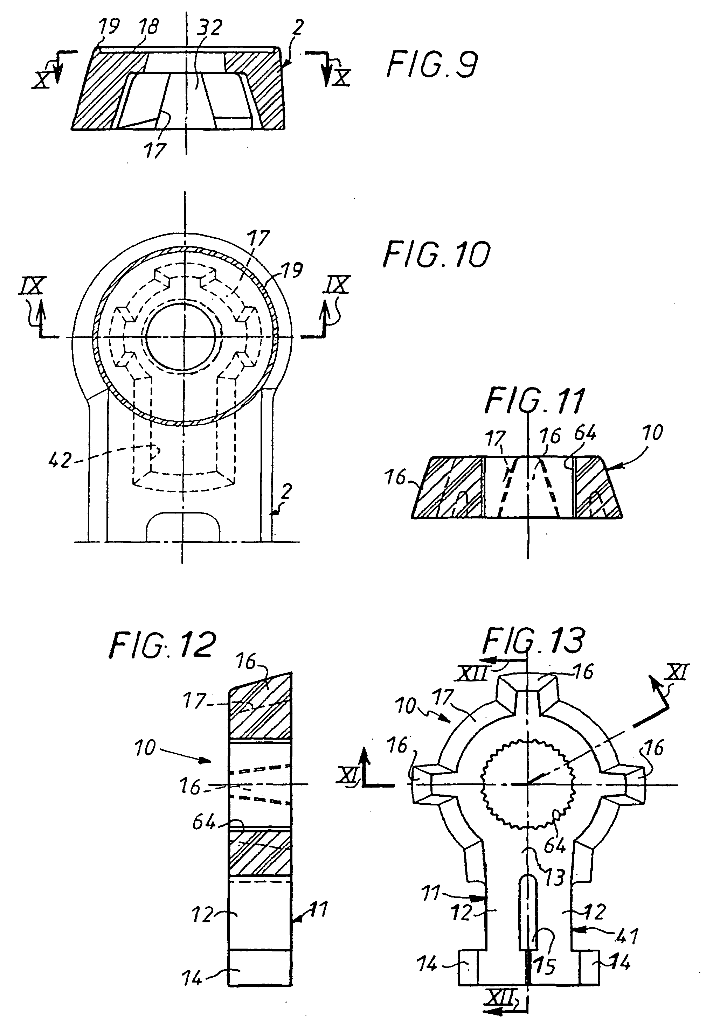

Les figures 9 et 10 montrent un moyeu 2 d'extrémité de bras d'essuie-glace du type obtenu par coulée sous pression. Il comporte, d'une part, une face plane circulaire 18, munie d'une bordure de centrage 19, servant de siège à la rondelle de blocage 6, et, d'autre part, sur la face opposée, la cavité 32 pour la bague de liaison 10 représentée sur les figures 11 à 13. L'ensemble comporte des dépouilles permettant un moulage direct dans un moule en deux parties, sans nécessiter de tiroirs supplémentaires. Pour des bras entraîneurs inclinés à 15°, par exemple, on choisira un angle de dépouille des parois de la cavité (32) de l'ordre de 17° permettant son démoulage direct.

Une telle dépouille aura également l'avantage de n'être pas coinçante, d'autant plus qu'elle transmettra sur les stries 64 d'assemblage de la bague de liaison 10 à l'axe une pression radiale de frettage renforçant cet assemblage suivant chaque secteur circulaire situé entre deux nervures de flexion ou de butée. Le desserrage de l'écrou d'assemblage 7 d'un demi-tour environ suffira pour libérer la bague de liaison 10 de son blocage contre la butée 3 et pour permettre un réglage angulaire du bras 2 par flexion des pattes 12 de la bague de liaison 10. La réalisation de cette bague par moulage en matériau synthétique, tel que par exemple celui connu commercialement sous le nom de Hostaform C 2521, permet de transmettre un couple d'entraînement d'environ 60 Nm pour un bras entraîneur non bloqué, c'est-à-dire sans l'entraînement mécanique normalement assuré par le contact de la base de l'entraîneur 2 sur la butée 3 ni le renforcement de l'effet de frettage dû au serrage sur les faces en dépouille.

Les figures 11, 12 et 13 montrent la bague de liaison 10 correspondante, avec trois nervures radiales de butée 16 et une nervure 11 prolongée par deux pattes flexibles 12 avec talons d'appui d'extrémité 14, le moyeu 2 ayant globalement une cavité 32 de forme complémentaire, la même référence 17 y étant aussi utilisée pour désigner sa dépouille.

Les figures 14 et 15 montrent la même extrémité de bras que celle des figures 9 et 10, vue de dessous, montrant la cavité 32 en dépouille, pour la bague de liaison 10 décrite en référence aux figures 11, 12, 13 précédentes, avec, en surface grisée sur la figure 14, la portée d'appui de contact de blocage de l'embase de butée 3.

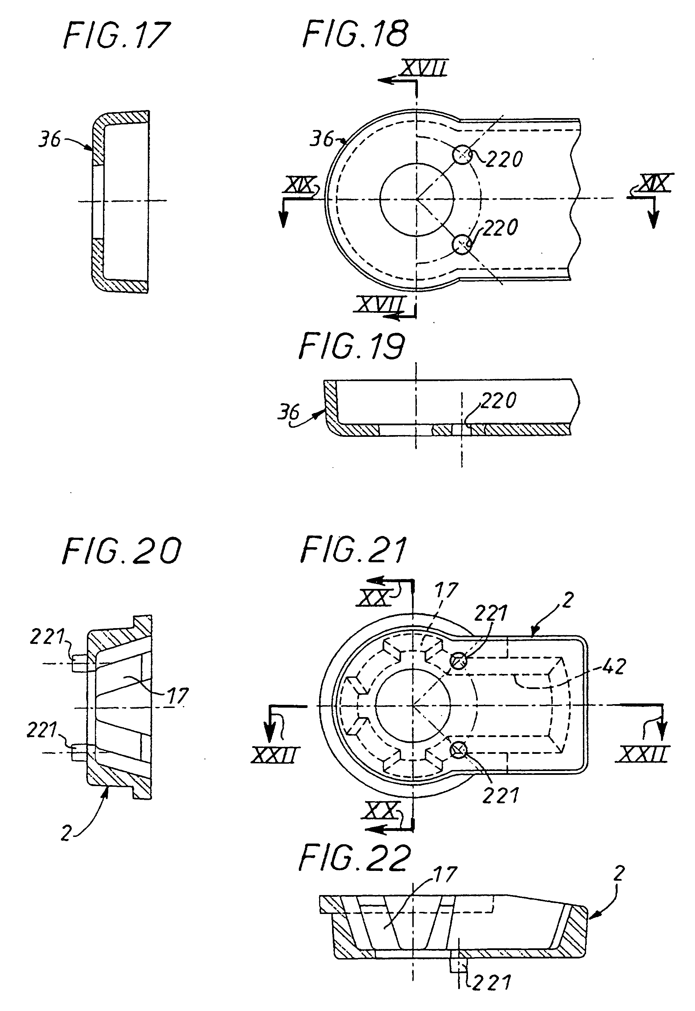

Selon les figures 17 à 22, le moyeu 2, représenté seul sur les figures 20 à 22, est en métal léger moulé et coiffé d'un boîtier 36 métallique en tôle découpée emboutie représenté seul sur les figures 17 à 19 ; l'assemblage est réalisé de la manière décrite à propos des figures 3 à 5 ; à cet assemblage par plots 221, est ajouté un assemblage par pénétration en force de mini stries ménagées sur les flancs externes du moyeu 2.

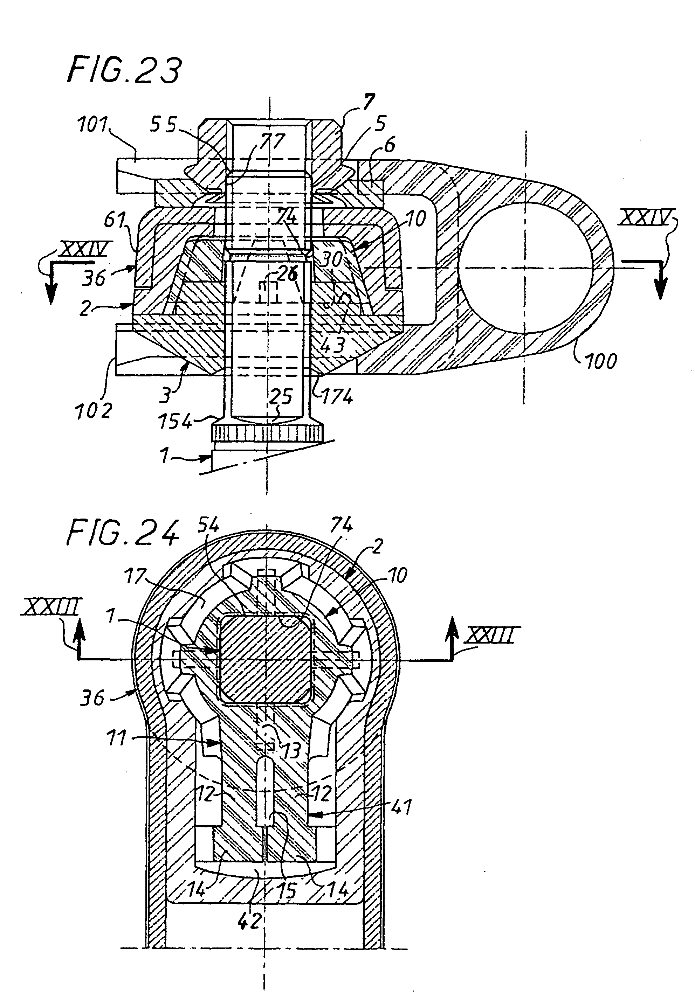

Dans la variante des figures 23 et 24, une fourchette d'assemblage 100, ou étrier, représenté uniquement sur la figure 23, amovible, est prévue pour faciliter la mise en place du sous-ensemble préassemblé sur l'extrémité de l'axe de pivotement 1, pour réglage de position angulaire et blocage. La fourchette 100, de préférence en matière plastique, est retirée après mise en place et blocage du bras sur son axe. La fourchette 100 comporte deux dents supérieures 101 prenant appui sur la rondelle 6 de part et d'autre de l'écrou 7. La partie inférieure de la fourchette 100 comporte également deux dents 102 prenant appui sur l'embase de butée 3 de part et d'autre de son trou d'engagement sur l'axe 1. Ces dents inférieures 102 sont reliées par une forme 103 en demi-tronc de cône facilitant le guidage d'engagement de l'extrémité de l'axe 1 dans le trou d'engagement de la butée 3. Ce sous-ensemble est ainsi prêt à être monté et ajusté sur son axe avec un minimum d'opérations, ce qui économise un temps précieux sur une chaîne de montage. Le bras préassemblé et muni de son embase de butée 3, préalablement orienté au mieux de sa position finale, est emboîté sur l'axe 1 sur une partie de ses cannelures jusqu'à la mise en butée de l'écrou 7 sur l'extrémité du filetage de l'axe 1. Lors du montage, l'opérateur prend sa visseuse, positionne le balai.d'essuie-glace selon un repérage rapporté sur le pare-brise et effectue le serrage de l'écrou 7 au couple prévu. Sans avoir à poser sa visseuse, il effectue ensuite la même opération sur le second bras d'essuie-glace. La fourchette de maintien 100 est retirée après serrage de l'écrou 7.

Ici, les moyens de coopération 74 sont de forme carrée et la portée transversale 154 de l'axe 1 est constituée par quatre segments ou méplats 25 préférentiellement inclinés et prolongeant les quatre faces planes dont chacune correspond à l'un des côtés du carré ; l'embase de butée 3 présente inférieurement des contre-méplats 174 correspondants.

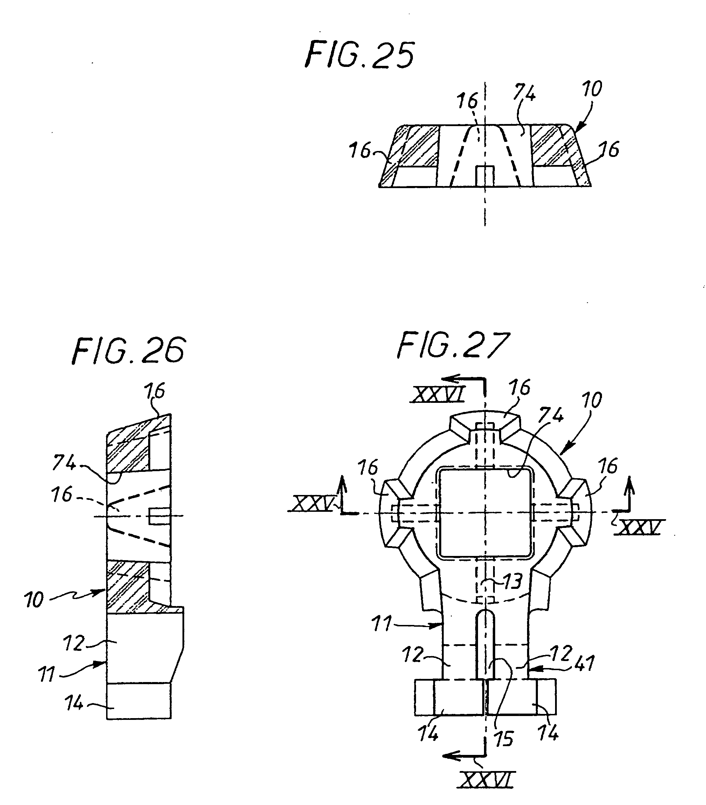

Les figures 25 à 27 montrent la bague de liaison 10 seule correspondant à cette variante des figures 23 et 24.

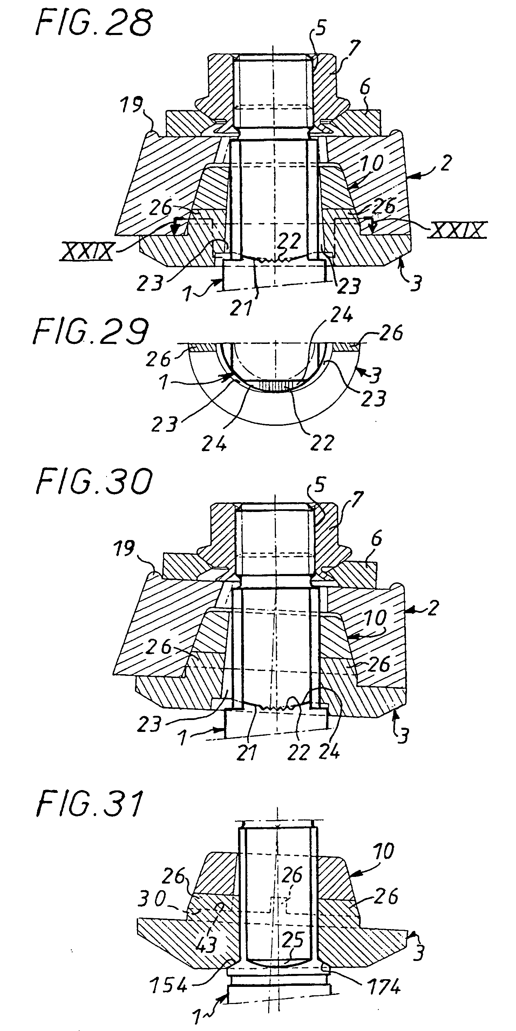

La figure 28 représente en coupe axiale un assemblage d'extrémité de bras d'essuie-glace 2 selon l'invention monté sur son axe 1 dans sa position normale perpendiculaire à cet axe, en appui sur l'embase de butée 3 comportant ici deux surfaces d'épaulement 21, cylindriques ou sphériques, convexes et munies de crans 22 perpendiculaires à l'axe et parallèles entre eux ; l'embase de butée 3 est emmanchée sur la portée transversale de l'axe 1 ici de forme complémentaire avec un jeu 23 transversal permettant son inclinaison par rapport à sa position normale, ses surfaces d'appui convexes et crantées 22 s'emboîtant sur des surfaces d'épaulement concaves et crantées 24 complémentaires de l'axe 1. La demi-section rabattue de la figure 29 montre ces surfaces 24 ainsi que le jeu d'assemblage 23 à ce niveau, résultant d'une ovalisation conique du trou d'assemblage de la bague de liaison 10 et de l'embase de butée 3.

La figure 30 montre le même ensemble que celui des figures 28 et 29 avec l'embase de butée 3 disposée en position inclinée. L'emboîtement mutuel des crans des surfaces d'appui assure le maintien de la position d'inclinaison choisie pour l'embase de butée 3 lors de son montage. Il en résulte un réglage d'inclinaison, positif ou négatif selon le sens choisi, du balai d'essuie-glace en caoutchouc.

Le même type de réglage pourra être effectué, avec les mêmes pièces constitutives, pour effectuer le réglage de la pression d'appui du bras d'essuie-glace, en agissant sur son inclinaison longitudinale, ce qui aura pour effet de modifier la tension du ressort d'appui. Il suffira, à cet effet, de décaler angulairement de 90° la position de l'axe 1 dans sa biellette d'entraînement. Ce choix remplacera la possibilité d'inclinaison du balai, vue précédemment, par une possibilité d'inclinaison du bras.

La figure 31 montre une variante d'un tel réglage d'inclinaison, appliqué à un assemblage du genre de celui des figures 23 et 24, où une extrémité d'axe de pivotement 1 comporte quatre méplats lui donnant une section carrée sur laquelle est emmanchée l'embase de butée 3 dont la face d'appui 43 est inclinée, par exemple de 3°, et qui transmet cette inclinaison à la bague de liaison 10, par l'intermédiaire de sa face d'appui 30 ; la bague de liaison 10 est bloquée en position de rotation sur l'embase de butée 3 par les quatre languettes 26 sur lesquelles elle s'emboîte. Cette inclinaison est donc ainsi transmise au bras d'essuie-glace qu'elle reçoit. Par une modification du calage de l'embase de butée 3 de 90° ou 180° sur son carré d'emboîtement sur l'axe 1, on obtiendra des calages angulaires différents de la bague de liaison 10 et donc du bras 2, non représenté ici.

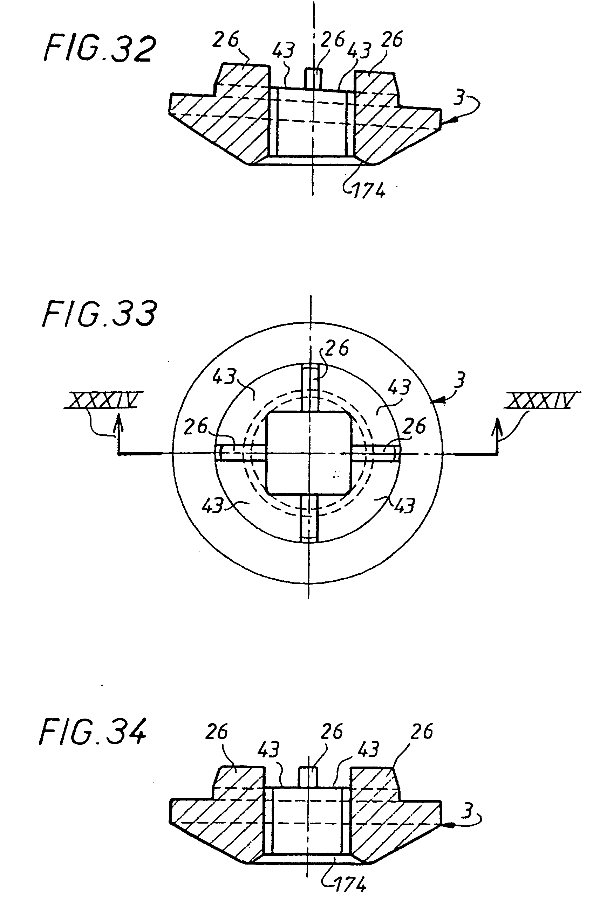

Les figures 32 et 33 montrent l'embase de butée 3, seule, de la figure 31.

La figure 34 montre, à titre comparatif, une embase de butée de ce genre mais sans face d'appui inclinée.

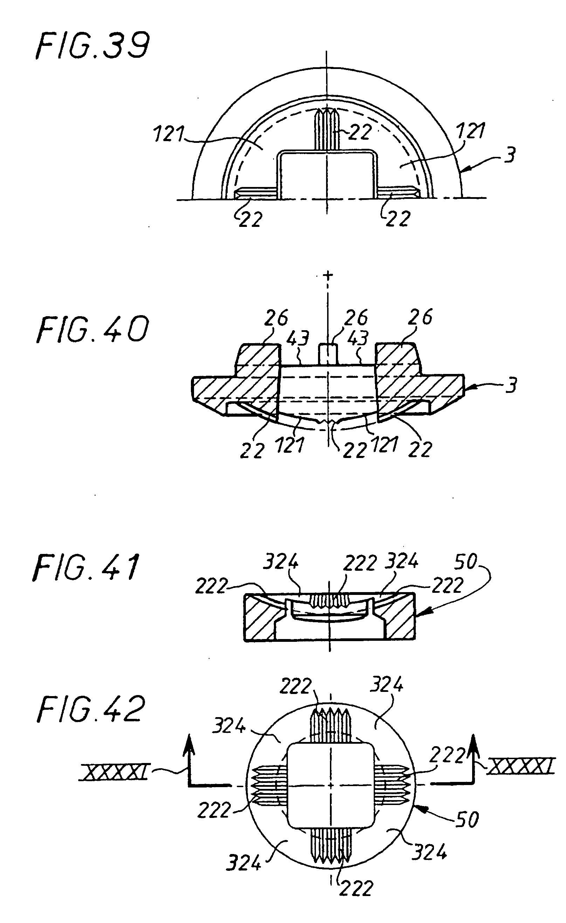

On pourra combiner les deux réglages en disposant, sur la butée 3 telle que représentée en coupe sur la figure 40, deux jeux de surfaces d'appui sphériques convexes, calées à 90° et prenant appui sur des surfaces sphériques concaves correspondantes formant la portée transversale de l'axe 1.

Comme on vient de le voir, ces inclinaisons nécessitent de doter la portée transversale de l'axe de surfaces d'épaulement, cylindriques ou sphériques, convexes ou concaves, complémentaires de celles de l'embase de butée.

Comme on le conçoit aisément, il est plus facile de réaliser, sur un axe, une portée transversale en forme de méplats.

Dès lors, l'invention prévoit, pour obtenir ces inclinaisons, de doter l'axe de ces méplats et de reporter les surfaces d'épaulement sur une rondelle intermédiaire disposée axialement entre ces méplats et l'embase de butée 3.

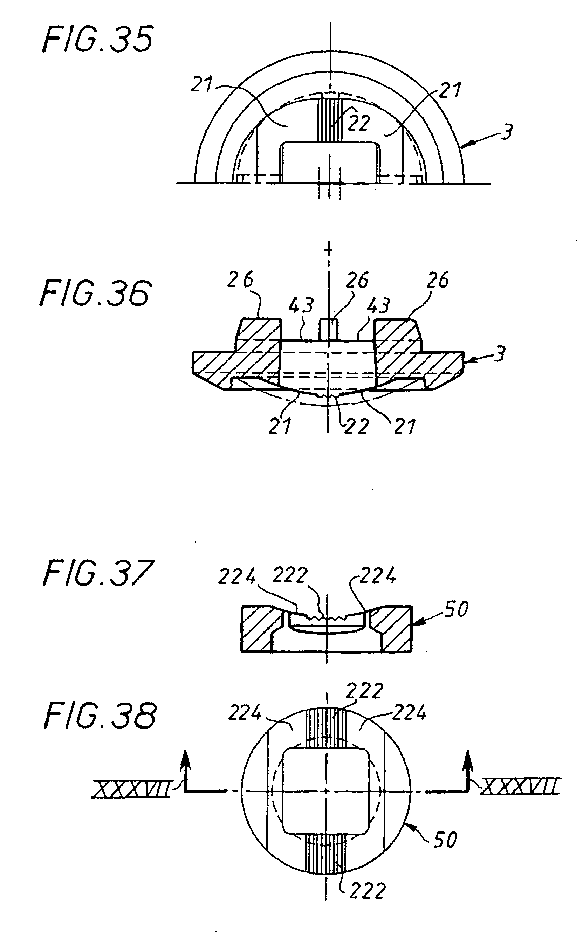

Les figures 37 et 38 montrent une telle rondelle 50 munie de surfaces d'épaulement cylindriques 224 à crans 222, adaptée à coopérer avec l'embase de butée 3 montrée sur les figures 35 et 36 où l'on voit ses surfaces d'épaulement 21 munies de crans 22.

Avec cette rondelle de butée 50 munie de surfaces d'épaulement cylindriques 224, les deux réglages précédemment évoqués pourront être obtenus par simple modification de la position de la rondelle de butée sur l'axe, sans avoir à prédéterminer la position de l'axe par rapport à sa biellette d'entraînement indexée.

Selon les figures 41 et 42, la rondelle intermédiaire 50 porte des surfaces d'épaulements sphériques 324 munies de crans 222 et est adaptée à coopérer avec l'embase de butée 3 des figures 39 et 40 par ses surfaces d'épaulement 121, sphériques, munies de crans 22.

L'ensemble des surfaces sphériques convexes et concaves forme respectivement des secteurs d'une même calotte sphérique centrée sur l'axe 1 et un assemblage du type à rotule bloqué par les emboîtements des crans, dont le calage à 90° permet un glissement longitudinal des dentures emboîtées pour permettre le réglage du calage des jeux de dentures perpendiculaires. On obtient donc un système de réglage trés souple tout en restant d'un faible coût par son nombre réduit de composants, le même dispositif pouvant s'adapter, par ces réglages, à différents types de pare-brise.

## Revendications

1. Dispositif de fixation d'un moyeu de bras d'essuie-glace (2) sur l'axe de pivotement (1) avec des moyens de blocage (6, 7) du bras sur l'axe de pivotement (1), une cavité (32) ménagée dans le moyeu (2) contenant des moyens de réglage de positionnement angulaire du bras par rapport à l'axe (1), ledit moyeu (2) prenant appui sur une embase de butée (3) emboîtée sur une portée (4) de l'axe (1), ledit dispositif étant **caractérisé en ce que**, les moyens de blocage (6, 7) étant adaptés à prendre soit une position de serrage pour serrer le moyeu (2) contre l'embase de butée (3), soit une position de desserrage, lesdits moyens de réglage comportent une bague de liaison (10) solidaire en rotation de l'axe (1) et logée dans ladite cavité (32) du moyeu (2) avec un certain jeu permettant un débattement angulaire relatif limité entre la bague de liaison (10) et le moyeu (2) en position de desserrage des moyens de blocage (6, 7), tandis que tout déplacement relatif est interdit entre la bague de liaison (10) et le moyeu (2) en position de serrage des moyens de blocage (6, 7).

2. Dispositif de fixation selon la revendication 1, **caractérisé en ce que** ledit jeu angulaire de la bague de liaison (10) à l'intérieur de la cavité (32) du moyeu (2) est déterminé par un emboîtement de la bague de liaison (10) suivant un contour polygonal.

3. Dispositif de fixation selon l'une des revendications 1 ou 2, **caractérisé en ce qu'**un élément élastique (33) amortisseur du déplacement angulaire est interposé dans un espace séparant l'intérieur du moyeu (2) de l'extérieur de la bague de liaison (10).

4. Dispositif de fixation selon l'une des revendications 1 ou 3, **caractérisé en ce que** la bague de liaison (10) a un contour extérieur cylindrique emboîté dans un alésage correspondant du moyeu (2), sa rotation dans cet alésage étant angulairement limitée par au moins une nervure radiale (11, 31) pouvant osciller dans au moins un logement radial (42) correspondant du moyeu (2), des moyens élastiques (33) étant interposés entre les parois radiales de la nervure (11, 31) et les parois radiales opposées du logement radial (42).

5. Dispositif de fixation selon l'une quelconque des revendications précédentes, **caractérisé en ce qu'**il comporte une coque externe métallique formant un boîtier (36) autour du moyeu (2).

6. Dispositif de fixation selon l'une quelconque des revendications 1 à 5, **caractérisé en ce que** la perpendicularité du bras par rapport à l'axe de pivotement (1) est assurée par l'embase de butée (3) qui vient en butée sur une portée transversale (9) de l'axe (1).

7. Dispositif de fixation selon les revendications 1 et 5, **caractérisé en ce que** les flancs (61) du boîtier (36) ont une hauteur telle par rapport au moyeu (2) qu'ils prennent appui contre l'embase de butée (3).

8. Dispositif de fixation selon les revendications 1 et 5, **caractérisé en ce que** le boîtier (36) et le moyeu (2) ont une forme et les flancs (61) du boîtier (36) ont une hauteur par rapport au moyeu (2) telles que le fond et les flancs du boîtier prennent appui sur le dessus du moyeu (2) et sur ses flancs, respectivement, ledit moyeu (2) étant lui-même en appui sur l'embase de butée (3), les flancs du moyeu (2) étant striés.

9. Dispositif de fixation selon l'une quelconque des revendications précédentes, **caractérisé en ce que** la bague de liaison (10) est rendue solidaire en rotation de l'axe (1) par des moyens de coopération, ou de complémentarité, de formes (44-64, 144-164, 54-74, 154-174).

10. Dispositif de fixation selon la revendication 9, **caractérisé en ce que** ces moyens de coopération de formes sont constitués par des stries (44-64, 144-164).

11. Dispositif de fixation selon la revendication 9, **caractérisé en ce que** ces moyens de coopération de formes sont constitués par des polygones, avantageusement des carrés (54-74, 154-174).

12. Dispositif de fixation selon l'une quelconque des revendications 9 à 11, **caractérisé en ce que** les moyens de coopération de formes sont portés l'un (64, 74) directement par la bague de liaison (10), l'autre (44, 54) par l'axe (1).

13. Dispositif de fixation selon l'une quelconque des revendications 9 à 11, **caractérisé en ce que** la bague de liaison (10) est rendue solidaire en rotation de l'axe (1) par l'intermédiaire de l'embase de butée (3), les moyens de coopération de formes étant portés l'un (164, 174) par l'embase de butée (3), l'autre (144, 154) par la portée transversale (9) de l'axe (1), des moyens complémentaires (26), avantageusement indexés, étant prévus pour l'entraînement de la bague de liaison (10) par l'embase de butée (3).

14. Dispositif de fixation selon les revendications 10 et 12, **caractérisé en ce que** l'axe (1) comporte, comme dispositif dit de "détrompage", des absences de ses stries (44) laissant subsister des creux, alors que la bague de liaison (10) du moyeu (2) du bras comporte parmi ses stries (64) des stries dites de détrompage sans creux entre elles, les pleins en résultant correspondant aux creux des stries manquantes de l'arbre (1), l'embase de butée (3) comportant la totalité de ses stries (164).

15. Dispositif de fixation selon la revendication 4, **caractérisé en ce que** la nervure radiale (11) comporte une partie terminale élastique (41) susceptible de prendre appui sur une partie de la paroi correspondante du logement radial (42).

16. Dispositif de fixation selon la revendication 15, **caractérisé en ce que** la flexion élastique de la nervure radiale (11) est assurée en disposant une forme en saillie (14) à son extrémité, qui prend seule appui sur la paroi de son logement (42) et permet une libre flexion de la nervure (11) dans ce logement (42).

17. Dispositif de fixation selon l'une des revendications 15 ou 16, **caractérisé en ce que** la nervure radiale (11) comporte au moins une patte de flexion (12).

18. Dispositif de fixation selon la revendication 17, **caractérisé en ce que** la longueur des pattes de flexion (12) est inférieure à la profondeur radiale du logement (42), la base de la nervure (11) formant une butée en appui sur une partie de la paroi correspondante du logement (42) limitant le déplacement angulaire du bras lors de son réglage de mise en place ou en cas de desserrage.

19. Dispositif de fixation selon l'une quelconque des revendications précédentes, **caractérisé en ce qu'**il est disposé sur la périphérie de la bague de liaison (10) au moins une nervure de butée (16) de déplacement angulaire.

20. Dispositif de fixation selon l'une quelconque des revendications 12 à 16, **caractérisé en ce que** l'emboîtement de la bague de liaison (10) dans la cavité (32) correspondante du moyeu de bras d'essuie-glace (2) comporte une dépouille (17).

21. Dispositif de fixation selon la revendication 20, **caractérisé en ce que** la dépouille (17) du contour externe de la bague de liaison (10) et des parois correspondantes de la cavité (32) du moyeu (2) est au moins égale ou supérieure aux dépouilles d'inclinaison du moyeu de bras (2) permettant son démoulage direct.

22. Dispositif de fixation selon la revendication 1 à 21, **caractérisé en ce que** les moyens de blocage comprennent un écrou (7) et une rondelle de blocage (6) maintenus en position sur la face externe (18) du moyeu de bras d'essuie-glace (2) par un bourrelet de centrage (19) qu'elle présente et qui est concentrique au trou de sortie de l'extrémité filetée (5) de l'axe (1).

23. Dispositif de fixation selon la revendication 1 à 22, **caractérisé en ce qu'**il est constitué en un sous-ensemble pré-assemblé en extrémité de bras d'essuie-glace, comportant d'une part un écrou (7) et une rondelle de blocage (6), maintenus en position sur la face externe du moyeu de bras d'essuie-glace (2) par une fourchette de maintien (100) comportant deux dents (101) supérieures prenant appui sur la rondelle (6) de part et d'autre de l'écrou (7), et également deux dents (102) inférieures prenant appui sur l'embase de butée (3) de part et d'autre de son trou d'engagement (8) sur l'axe (1), les dents inférieures (102) étant reliées par une forme en demi-tronc de cône (103) formant entonnoir facilitant le guidage d'engagement de l'extrémité de l'axe (1) dans le trou (8) de l'embase de butée (3).

24. Dispositif de fixation selon la revendication 9, **caractérisé en ce que** la distance de la face d'appui (30) de la bague de liaison (10) sur l'embase de butée (3) jusqu'à l'entrée (77) du taraudage de l'écrou est supérieure à la distance entre l'entrée des moyens de complémentarité de formes portés par l'axe (1) et le sommet (55) du filetage de l'arbre, de façon à pouvoir engager les moyens de complémentarité de formes de la bague (10) sur les moyens de complémentarité de formes de l'axe (1) avant de visser l'écrou (7).

25. Dispositif de fixation selon la revendication 13, **caractérisé en ce que** la distance de la face d'appui de l'embase de butée (3) sur la portée transversale de l'axe (1) jusqu'à l'entrée (77) du taraudage de l'écrou est supérieure à la distance entre l'entrée des moyens de complémentarité de formes portés par l'axe (1) et le sommet (55) du filetage de l'arbre, de façon à pouvoir engager les moyens de complémentarité de formes de l'embase de butée (3) sur les moyens de complémentarité de formes de l'axe (1) avant de visser l'écrou (7).

26. Dispositif de fixation selon la revendication 1 à 25, **caractérisé en ce que** la portée transversale (9) de l'axe d'entraînement (1) sur laquelle vient s'emmancher l'embase de butée (3) comporte au moins deux méplats (25) diamétralement opposés, limités en longueur par des surfaces d'épaulement (24), concaves et munies de crans (22) perpendiculaires à l'axe (1) et parallèles entre eux, l'embase de butée (3) s'emmanchant sur la portée de l'axe de pivotement (1) avec un jeu (23) permettant son inclinaison par rapport à sa position normale perpendiculaire, et comportant des surfaces d'appui convexes et crantées (21, 121) s'emboîtant sur les surfaces d'épaulement concaves et crantées (24) de l'axe d'entraînement, l'emboîtement mutuel des crans (22) des surfaces d'appui assurant le maintien de la position d'inclinaison choisie pour l'embase de butée (3) lors de son montage.

27. Dispositif de fixation selon la revendication 26, **caractérisé en ce que** les surfaces d'épaulement (24) de l'axe (1) et les surfaces d'appui (21) de la l'embase de butée (3) sont des segments de surfaces cylindriques d'un cylindre dont l'axe rencontre l'axe de pivotement, perpendiculairement à celui-ci.

28. Dispositif de fixation selon la revendication 26, **caractérisé en ce que** les surfaces d'épaulement de l'axe (1) et les surfaces d'appui (121) de l'embase de butée (3) sont des secteurs d'une sphère dont le centre est sur l'axe de pivotement et forment un assemblage du type à rotule bloqué par les emboîtements des crans (22), dont le calage à 90° permet un glissement longitudinal des crans emboîtés pour permettre le réglage du calage des jeux de crans perpendiculaires.

29. Dispositif de fixation selon la revendications 1 à 24, **caractérisé en ce que** l'axe de pivotement (1) comporte quatre méplats lui donnant une section carrée sur laquelle est emmanchée l'embase de butée (3) dont la base d'appui (43) est inclinée, et qui transmet cette inclinaison à la bague de liaison (10), bloquée en position de rotation sur la base d'appui (43) de l'embase de butée (3) par les moyens complémentaires (26) constitués de quatre languettes sur lesquelles elle s'emboîte, des calages angulaires différents de la bague de liaison (10) et donc du bras d'essuie-glace (2) étant obtenus par une modification du calage de l'embase de butée (3) de 90° ou 180° sur son carré d'emboîtement sur l'axe (1).

30. Dispositif de fixation selon la revendication 29, **caractérisé en ce qu'**on interpose, entre l'embase de butée (3) et la base de son carré d'emboîtement sur l'axe, une rondelle comportant sur sa face d'appui de la butée une surface crantée concave sur laquelle viendra prendre appui une surface crantée convexe de l'embase de butée (3).

31. Dispositif de fixation selon l'une quelconque des revendications précédentes, **caractérisé en ce que** la longueur d'emboîtement du moyeu (2) de bras d'essuie-glace, comprenant la longueur d'engagement sur l'axe (1) de l'ensemble embase de butée (3) et bague de liaison (10), est telle qu'elle permet le maintien du moyeu (2) sur l'axe (1) ainsi que l'arc-boutement du moyeu (2) assurant l'appui de la lame d'essuie-glace sur le pare-brise.

## Patentansprüche

1. Vorrichtung zur Befestigung einer Nabe (2) eines Scheibenwischerarms an der Schwenkachse (1) mit Mitteln zum Blockieren (6, 7) des Arms an der Schwenkachse (1), wobei ein in der Nabe (2) vorgesehener Hohlraum Mittel zum Einstellen der Winkelpositionierung des Arms bezüglich der Achse (1) enthält, wobei die Nabe (2) an einem Anschlagblock (3) anliegt, der an einen Haltabschnitt (4) der Achse (1) aufgesetzt ist, wobei die Vorrichtung **dadurch gekennzeichnet ist, daß**, da die Blockiermittel (6, 7) dazu geeignet sind, entweder eine Einspannposition zum Spannen der Nabe (2) gegen den Anschlagblock (3) oder eine Freigabeposition einzunehmen, die Einstellmittel einen Verbindungsring (10) aufweisen, der mit der Achse (1) drehfest verbunden und in dem Hohlraum (32) der Nabe (2) mit einem gewissen Spiel untergebracht ist, das einen begrenzten relativen Winkelausschlag zwischen dem Verbindungsring (10) und der Nabe (2) in der Freigabeposition der Blockiermittel (6, 7) ermöglicht, während jede Relativverschiebung zwischen dem Verbindungsring (10) und der Nabe (2) in der Einspannposition der Blockiermittel (6, 7) untersagt ist.

2. Befestigungsvorrichtung nach Anspruch 1, **dadurch gekennzeichnet, daß** das Winkelspiel des Verbindungsrings (10) im inneren des Hohlraums (32) durch ein Einsetzen des Verbindungsrings (10) entlang einer polygonalen Kontur bestimmt ist.

3. Befestigungsvorrichtung nach einem der Ansprüche 1 oder 2, **dadurch gekennzeichnet, daß** ein elastisches Mittel (33) zum Dämpfen der Winkelverschiebung in einem Raum eingeschaltet ist, der das Innere der Nabe (2) vom Äußeren des Vebindungsrings (10) trennt.

4. Befestigungsvorrichtung nach einem der Ansprüche 1 oder 3, **dadurch gekennzeichnet, daß** der Verbindungsring (10) eine zylindrische äußere Kontur hat, die in eine entsprechende Bohrung der Nabe (2) eingepaßt ist, wobei seine Drehung in dieser Bohrung winkelmäßig durch wenigstens eine radiale Rippe (11, 31) begrenzt ist, die in wenigstens einer radialen Aufnahme (42) schwingen kann, die der Nabe (2) entspricht, wobei elastische Mittel (33) zwischen den radialen Wänden der Rippe (11, 31) und den gegenüberliegenden radialen Wänden der radialen Aufnahme (42) angeordnet sind.

5. Befestigungsvorrichtung nach einem der vorhergehenden Ansprüche, **dadurch gekennzeichnet, daß** sie eine äußere Metallschale aufweist, die ein Gehäuse (36) um die Nabe (2) bildet.

6. Befestigungsvorrichtung nach einem der Ansprüche 1 bis 5, **dadurch gekennzeichnet, daß** die Vertikalität des Arms bezüglich der Schwenkachse (1) durch den Anschlagblock (3) gewährleistet ist, die in Anschlag an eine Querauflagefläche (9) der Achse (1) gelangt.

7. Befestigungsvorrichtung nach den Ansprüchen 1 und 5, **dadurch gekennzeichnet, daß** die Flanken (61) des Gehäuses (36) eine solche Höhe bezüglich der Nabe (2) haben, daß sie gegen den Anschlagblock (3) anliegen.

8. Befestigungsvorrichtung nach den Ansprüchen 1 und 5, **dadurch gekennzeichnet, daß** das Gehäuse (36) und die Nabe (2) eine solche Form und die Flanken (61) des Gehäuses (36) eine solche Höhe bezüglich der Nabe (2) haben, daß der Boden und die Flanken des Gehäuses am oberen Teil der Nabe (2) bzw. an seinen Flanken anliegen, wobei die Nabe (2) selbst an dem Anschlagblock (3) anliegt, wobei die Flanken der Nabe (2) gerillt sind.

9. Befestigungsvorrichtung nach einem der vorhergehenden Ansprüche, **dadurch gekennzeichnet, daß** der Verbindungsring (10) durch Formenkooperationsmittel oder Formenkomplementaritätsmittel (44-64, 144-164, 54-74, 154-174) mit der Achse (1) drehfest verbunden ist.

10. Befestigungsvorrichtung nach Anspruch 9, **dadurch gekennzeichnet, daß** diese Formenkooperationsmittel durch Rillen (44-64, 144-164) gebildet sind.

11. Befestigungsvorrichtung nach Anspruch 9, **dadurch gekennzeichnet, daß** diese Formenkooperationsmittel durch Polygone, vorteilhaft Quadrate (54-74, 154-174), gebildet sind.

12. Befestigungsvorrichtung nach einem der Ansprüche 9 bis 11, **dadurch gekennzeichnet, daß** von den Formenkooperationsmitteln eines (64, 74) direkt von dem Verbindungsring (10), das andere (44, 54) von der Achse (1) getragen wird.

13. Befestigungsvorrichtung nach einem der Ansprüche 9 bis 11, **dadurch gekennzeichnet, daß** der Verbindungsring (10) über den Anschlagblock (3) mit der Achse (1) drehfest verbunden ist, wobei von den Formenkooperationsmitteln eines (164, 174) von dem Anschlagblock (3), das andere von der Querauflagefläche (9) der Achse (1) getragen wird, wobei komplementäre Mittel (26), die vorteilhaft indexiert sind, zum Mitnehmen des Verbindungsrings (10) durch den Anschlagblock (3) vorgesehen sind.

14. Befestigungsvorrichtung nach den Ansprüchen 10 und 12, **dadurch gekennzeichnet, daß** die Achse (1) als sogenannte "Unverwechselbarkeitseinrichtung" Abwesenheiten ihrer Rillen (44) aufweist, die Lücken verbleiben lassen, während der Verbindungsring (10) der Nabe (2) des Arms unter seinen Rillen (64) sogenannte Unverwechselbarkeitsrillen ohne Lücken dazwischen aufweist, wobei die daraus resultierenden gefüllten Räume den Lücken der fehlenden Rippen der Welle (1) entsprechen, wobei der Anschlagblock (3) die Gesamtheit ihrer Rillen (164) aufweist.

15. Befestigungsvorrichtung nach Anspruch 4, **dadurch gekennzeichnet, daß** die radiale Rippe (11) einen elastischen Endteil (41) aufweist, der an einem Teil der entsprechenden Wand der radialen Aufnahme (42) anliegen kann.

16. Befestigungsvorrichtung nach Anspruch 15, **dadurch gekennzeichnet, daß** die elastische Biegung der radialen Rippe (11) gewährleistet ist, indem eine vorspringende Form (14) an ihrem Ende angeordnet ist, die alleine an der Wand ihrer Aufnahme (42) anliegt und eine freie Biegung der Rippe (11) in dieser Aufnahme (42) ermöglicht.

17. Befestigungsvorrichtung nach einem der Ansprüche 15 oder 16, **dadurch gekennzeichnet, daß** die radiale Rippe (11) wenigstens eine Biegeklammer (12) aufweist.

18. Befestigungsvorrichtung nach Anspruch 17, **dadurch gekennzeichnet, daß** die Länge der Biegeklammem (12) geringer als die radiale Tiefe der Aufnahme (42) ist, wobei die Basis der Rippe (11) einen Anschlag in Anlage an einem Teil der entsprechenden Wand der Aufnahme (42) bildet, welche die Winkelverschiebung des Arms bei seiner Einsetzregelung oder im Falle eines Lösens begrenzt.

19. Befestigungsvorrichtung nach einem der vorhergehenden Ansprüche, **dadurch gekennzeichnet, daß** am Umfang des Verbindungsrings (10) wenigstens eine Anschlagrippe (16) zur Winkelverschiebung angeordnet ist.

20. Befestigungsvorrichtung nach einem der Ansprüche 12 bis 16, **dadurch gekennzeichnet, daß** der Rücksprung des Verbindungsrings (10) in dem entsprechenden Hohlraum (32) der Scheibenwischerarmnabe (2) eine Ausnehmung (17) aufweist.

21. Befestigungsvorrichtung nach Anspruch 20, **dadurch gekennzeichnet, daß** die Ausnehmung der äußeren Kontur des Verbindungsrings (10) und der entsprechenden Wände des Hohlraums (32) der Nabe (2) wenigstens gleich oder größer als die Neigungsausnehmungen der Armnabe (2) ist, welche ihr direktes Entformen ermöglichen.

22. Befestigungsvorrichtung nach Anspruch 1 bis 21, **dadurch gekennzeichnet, daß** die Blockiermittel eine Mutter (7) und eine Blockierscheibe (6) aufweisen, die an der Außenseite (18) der Schweibenwischerarmnabe (2) durch einen Zentrierwulst (19) an Position gehalten werden, den sie aufweist und der konzentrisch zu dem Ausgangsloch des Gewindeendes (5) der Achse (1) ist.

23. Befestigungsvorrichtung nach Anspruch 1 bis 22, **dadurch gekennzeichnet, daß** sie aus einer vorzusammengefügten Untereinheit am Ende des Scheibenwischerarms gebildet ist, die einerseits eine Mutter (7) und eine Blockierscheibe (6) aufweist, die an der Außenseite der Scheibenwischerarmnabe (2) durch eine Haltegabel (100) an Position gehalten werden, die zwei obere Zähne (101) aufweist, die an der Scheibe (6) und beiderseits der Mutter (7) anliegen, und auch zwei untere Zähne (102), die an dem Anschlagblock (3) beiderseits ihres Lochs (8) zum Eingriff an der Achse (1) anliegen, wobei die unteren Zähne (102) durch eine halbkegelstumpfartige Form (103) verbunden sind, die einen Trichter bildet, der die Eingriffsführung des Endes der Achse (1) in das Loch (8) des Anschlagblocks (3) erleichtert.

24. Befestigungsvorrichtung nach Anspruch 9, **dadurch gekennzeichnet, daß** der Abstand der Anlagesitzfläche (30) des Verbindungsrings (10) an dem Anschlagblock (3) bis zum Eingang (77) des Innengewindes der Mutter größer als der Abstand zwischen dem Eingang der von der Achse (1) getragenen Formenkomplementaritätsmittel und dem Scheitel (55) des Gewindes der Welle ist, so daß die Formenkomplementaritätsmittel des Rings (10) an den Formenkomplementaritätsmitteln der Achse (1) in Eingriff gebracht werden können, bevor die Mutter (7) aufgeschraubt wird.

25. Befestigungsvorrichtung nach Anspruch 13, **dadurch gekennzeichnet, daß** der Abstand der Anlagesitzfläche (30) des Anschlagblocks (3) an der Querauflagefläche der Achse (1) bis zum Eingang (77) des Innengewindes der Mutter größer als der Abstand zwischen dem Eingang der von der Achse (1) getragenen Formenkomplementaritätsmittel und dem Scheitel (55) des Gewindes der Welle ist, so daß die Formenkomplementaritätsmittel der Anlagesitzfläche (30) an den Formenkomplementaritätsmitteln der Achse (1) in Eingriff gebracht werden können, bevor die Mutter (7) aufgeschraubt wird.

26. Befestigungsvorrichtung nach Anspruch 1 bis 25, **dadurch gekennzeichnet, daß** die Querauflagefläche (9) der Mitnehmerachse (1), an welcher der Anschlagblock (3) eingeschoben wird, wenigstens zwei diametral entgegengesetzte Anflachungen (25) aufweist, die in der Länge durch Schulterflächen (24) begrenzt sind, welche konkav und mit Ausschnitten (22) senkrecht zu der Achse (1) versehen sowie zueinander parallel sind, wobei der Anschlagblock (3) an der Anlagefläche der Schwenkachse (1) mit einem Spiel (23) eingeschoben wird, welches ihre Neigung bezüglich ihrer normalen senkrechten Position ermöglicht, und konvexe und gezahnte Anlageflächen (21, 121) aufweist, welche an die konkaven und gezahnten Schulterflächen (24) der Mitnehmerachse eingepaßt werden, wobei das gegenseitige Einsetzen der Ausschnitte (22) der Anlageflächen den Halt der gewählten Neigungsposition für den Anschlagblock (3) bei ihrer Montage gewährleistet.

27. Befestigungsvorrichtung nach Anspruch 26, **dadurch gekennzeichnet, daß** die Schulterflächen (24) der Achse (1) und die Anlageflächen (21) des Anschlagblocks (3) Segmente mit zylindrischen Flächen eines Zylinders sind, dessen Achse die Schwenkachse senkrecht dazu trifft.

28. Befestigungsvorrichtung nach Anspruch 26, **dadurch gekennzeichnet, daß** die Schulterflächen der Achse (1) und die Anlageflächen (121) des Anschlagblocks (3) Sektoren einer Kugel sind, deren Zentrum auf der Schwenkachse ist, und eine Zusammenfügung vom Typ mit Kugelgelenk bilden, die von den Rücksprüngen der Ausschnitte (22) blockiert ist, deren Verkeilung mit 90° ein Längsgleiten der eingepaßten Ausschnitte ermöglicht, um die Einstellung der Verkeilung der Sätze von senkrechten Ausschnitten zu ermöglichen.

29. Befestigungsvorrichtung nach Anspruch 1 bis 24, **dadurch gekennzeichnet, daß** die Schwenkachse (1) vier Anflachungen aufweist, die ihr einen quadratischen Querschnitt geben, auf den der Anschlagblock (3) eingeschoben ist, deren Anlagebasis (43) geneigt ist, und die diese Neigung zu dem Verbindungsring (10) überträgt, der in der Drehposition an der Anlagebasis (43) des Anschlagblocks (3) durch komplementäre Mittel (26) blockiert ist, die aus vier Zungen gebildet sind, an welche sie eingepaßt wird, wobei unterschiedliche Winkelverkeilungen des Verbindungsrings (10) und damit des Scheibenwischerarms (2) durch eine Modifizierung der Verkeilung des Anschlagblocks (3) um 90° oder 180° an ihrem Einpassungsquadrat an der Achse (1) erhalten werden.

30. Befestigungsvorrichtung nach Anspruch 29, **dadurch gekennzeichnet, daß** man zwischen dem Anschlagblock (3) und der Basis ihres Einpassungsquadrats an der Achse eine Scheibe anordnet, die an ihrer Anlagefläche des Anschlags eine konkave gezahnte Fläche aufweist, an welcher eine konvexe gezahnte Fläche des Anschlagblocks (3) anliegt.

31. Befestigungsvorrichtung nach einem der vorhergehenden Ansprüche, **dadurch gekennzeichnet, daß** die Einsetzlänge der Scheibenwischerarmnabe (2) mit der Eingriffslänge an der Achse (1) der Einheit aus Anschlagblock (3) und Verbindungsring (20) derart ist, daß sie den Halt der Nabe (2) an der Achse (1) sowie das Stützen der Nabe (2) ermöglicht, womit die Anlage des Scheibenwischerblatts auf der Windschutzscheibe gewährleistet ist.

## Claims

1. Device for fixing a windscreen wiper arm hub (2) to the pivot spindle (1) with means (6, 7) of locking the arm on the pivot spindle (1), a cavity (32) provided in the hub (2) containing means of adjusting the angular positioning of the arm with respect to the spindle (1), the said hub (2) bearing on a stop base (3) fitted on a surface (4) of the spindle (1), the said device being **characterised in that**, the locking means (6, 7) being adapted to take either a clamping position for clamping the hub against the stop base (1) or an unclamped position, the said adjustment means comprising a connecting ring (10) rotationally integral with the spindle (1) and housed in the said cavity (32) of the hub (2) with a certain clearance allowing a limited relative angular movement between the connecting ring (10) and the hub (2) in the unclamped position of the locking means (6, 7), whilst any relative movement is prevented between the connecting ring (10) and the hub (2) in the clamping position of the locking means (6, 7).

2. Fixing device according to Claim 1, **characterised in that** the said angular clearance of the connecting ring (10) inside the cavity (32) of the hub (2) is determined by a fitting of the connecting ring (10) in a polygonal contour.

3. Fixing device according to one of Claims 1 or 2, **characterised in that** an elastic element (33) damping the angular movement is interposed between a space separating the inside of the hub (2) from the outside of the connecting ring (10).

4. Fixing device according to one of Claims 1 or 3, **characterised in that** the connecting ring (10) has a cylindrical external contour fitted in a corresponding bore in the hub (2), its rotation in this bore being angularly limited by at least one radial rib (11, 31) able to oscillate in at least one corresponding radial housing (42) in the hub (2), elastic means (33) being interposed between the radial walls of the rib (11, 31) and the opposite radial walls of the radial housing (42).

5. Fixing device according to any one of the preceding claims, **characterised in that** it comprises a metallic external shell forming a casing (36) around the hub (2).

6. Fixing device according to any one of Claims 1 to 5, **characterised in that** the perpendicularity of the arm with respect to the pivot spindle (1) is provided by the stop base (3) which comes into abutment on a transverse surface (9) of the spindle (1).

7. Fixing device according to Claims 1 and 5, **characterised in that** the flanks (61) of the casing (36) have a height with respect to the hub (2) such that they bear against the stop base (3).

8. Fixing device according to Claims 1 and 5, **characterised in that** the casing (36) and the hub (2) have a shape and the flanks (61) of the casing (36) have a height with respect to the hub (2) such that the bottom and flanks of the casing bear on the top of the hub (2) and on its flanks, respectively, the said hub (2) being itself in abutment on the stop base (3), the flanks of the hub (2) being serrated.

9. Fixing device according to any one of the preceding claims, **characterised in that** the connecting hub (10) is made rotationally integral with the spindle (1) by means of cooperation, or complementarity, of shapes (44-64, 144-164, 54-74, 154-174).

10. Fixing device according to Claim 9, **characterised in that** these means of cooperation of shapes consist of serrations (44-64, 144-164).

11. Fixing device according to Claim 9, **characterised in that** these means of cooperation of shapes consist of polygons, advantageously squares (54-74, 154-174).

12. Fixing device according to any one of Claims 9 to 11, **characterised in that** the means of cooperation of shapes are carried one (64, 74) directly by the connecting ring (10), the other (44, 54) by the spindle (1).

13. Fixing device according to any one of Claims 9 to 11, **characterised in that** the connecting ring (10) is made rotationally integral with the spindle (1) by means of the stop base (3), the means of cooperation of shapes being carried one (164, 174) by the stop base (3), the other (144, 154) by the transverse surface (9) of the spindle (1), complementary means (26), advantageously firmly located, being provided for the driving of the connecting ring (10) by the stop base (3).

14. Fixing device according to Claims 10 and 12, **characterised in that** the spindle (1) has, as a so-called "unmistakable location" device, absences of its serrations (4) leaving hollows, whilst the connecting ring (10) of the hub (2) of the arm comprises, amongst its serrations (64), so-called unmistakable location serrations without hollows between them, the solid part resulting therefrom corresponding to the hollows of the missing serrations on the shaft (1), the stop base (3) comprising all its serrations (164).

15. Fixing device according to Claim 4, **characterised in that** the radial rib (11) comprises an elastic end part (41) able to bear on a part of the corresponding wall of the radial housing (42).

16. Fixing device according to Claim 15, **characterised in that** the elastic flexion of the radial rib (11) is provided by disposing a projecting shape (14) at its end, which alone bears on the wall of its housing (42) and allows free flexion of the rib (11) in this housing (42).

17. Fixing device according to one of Claims 15 or 16, **characterised in that** the radial rib (11) comprises at least one flexion lug (12).

18. Fixing device according to Claim 17, **characterised in that** the length of the flexion lugs (12) is less than the radial depth of the housing (42), the base of the rib (11) forming a stop in abutment on a part of the corresponding wall of the housing (42) limiting the angular movement of the arm during its fitting adjustment or in the case of unclamping.

19. Fixing device according to any one of the preceding claims, **characterised in that** there is disposed on the periphery of the connecting ring (10) at least one angular movement stop rib (16).

20. Fixing device according to any one of Claims 12 to 16, **characterised in that** the fitting of the connecting ring (10) in the corresponding cavity (32) in the windscreen wiper arm hub (2) comprises a taper (17).

21. Fixing device according to Claim 20, **characterised in that** the taper (17) on the external contour of the connecting ring (10) and of the corresponding walls of the cavity (32) in the hub (2) is at least equal to or greater than the inclination tapers of the arm hub (2) enabling it to be removed directly from the mould.

22. Fixing device according to Claims 1 to 21, **characterised in that** the locking means comprise a nut (7) and a locking washer (6) held in position on the external face (18) of the windscreen wiper arm hub (2) by a centring rim (19) which it has and which is concentric with the exit hole of the threaded end (5) of the spindle (1).

23. Fixing device according to Claims 1 to 22, **characterised in that** it consists of a preassembled subassembly and the end of a windscreen wiper arm, comprising on the one hand a nut (7) and a locking washer (7), held in position on the external face of the windscreen wiper arm hub (2) by a holding fork (100) comprising two top teeth (101) bearing on the washer (6) on each side of the nut (7), are also two bottom teeth (102) bearing on the stop base (3) on each side of its hole (8) for engagement on the spindle (1), the bottom teeth (102) being connected by a shape in a half-truncated cone (103) forming a funnel facilitating the engagement guidance of the end of the spindle (1) in the hole (1) in the stop base (3).

24. Fixing device according to Claim 9, **characterised in that** the distance from the support face (30) of the connecting ring (10) on the stop base (3) as far as the entry (77) of the nut thread is greater than the distance between the entry of the complementarity of shapes means carried by the spindle (1) and the crest (55) of the shaft thread, so as to be able to engage the complementarity of shapes means of the ring (10) on the complementarity of shapes means of the spindle (1) before screwing the nut (7).

25. Fixing device according to Claim 13, **characterised in that** the distance from the support face of the stop base (3) on the transverse surface of the spindle (1) as far as the entry (77) of the nut thread is greater than the distance between the entry of the complementarity of shapes means carried by the spindle (1) and the crest (55) of the shaft thread, so as to be able to engage the complementarity of shapes means of the stop base (3) on the complementarity of shapes means of the spindle (1) before screwing the nut (7).

26. Fixing device according to Claims 1 to 25, **characterised in that** the transverse surface (9) of the drive spindle (1) on which the stop base (3) is fitted comprises at least two diametrically opposed flats (25), limited in length by shoulder surfaces (25), concave and provided with notches (22) perpendicular to the spindle (1) and parallel to each other, the stop base (3) fitting on the surface of the pivot spindle (1) with a clearance (23) allowing its inclination with respect to its normal perpendicular position, and comprising convex notched support surfaces (21, 121) fitting on the concave notched shoulder surfaces (24) of the drive spindle, the mutual fitting together of the notches (22) of the support surfaces providing the holding of the inclination position chosen for the stop base (3) when it is mounted.

27. Fixing device according to Claim 26, **characterised in that** the shoulder surfaces (24) of the spindle (1) and the support surfaces (21) of the stop base (3) are segments of cylindrical surfaces of a cylinder whose axis encounters the pivot spindle, perpendicular thereto.

28. Fixing device according to Claim 26, **characterised in that** the shoulder surfaces of the spindle (1) and the support surfaces (121) of the stop base (3) are sectors of a sphere whose centre is on the pivot spindle and form an assembly of the swivel type locked by the fitting together of the notches (22), whose fixing at 90° allows a longitudinal sliding of the fitted notches in order to allow the adjustment of the fixing of the perpendicular notch clearances.

29. Fixing device according to Claims 1 to 24, **characterised in that** the pivot spindle (4) comprises four flats, giving a square cross-section on which there is fitted the stop base (3) whose support base (43) is inclined, and which transmits this inclination to the connecting ring (10), locked in rotation position on the support base (43) of the stop base (3) by the complementary means (26) consisting of four tongues on which it fits, different angular fixings of the connecting ring (10) and therefore of the windscreen wiper arm (2) being obtained by a modification of the fixing of the stop base (3) of 90° or 180° on its square fitting on the spindle (1).

30. Fixing device according to Claim 29, **characterised in that** there is interposed, between the stop base (3) and the base of its fitting square on the spindle, a washer comprising, on its support face of the stop, a concave notch surface on which a convex notch surface of the stop base (3) will bear.

31. Fixing device according to any one of the preceding claims, **characterised in that** the fitting length of the windscreen wiper arm hub (2), comprising the length of engagement on the spindle (1) of the assembly consisting of stop base (3) and connecting ring (10), is such that it allows the holding of the hub (2) on the spindle (1) as well as the bracing of the hub (2) providing the abutment of the wiper blade on the windscreen.
